(19) Europäisches Patentamt
European Patent Office
Office européen des brevets

(11) **EP 3 079 299 A1**

(12) **EUROPEAN PATENT APPLICATION**
published in accordance with Art. 153(4) EPC

(43) Date of publication:
**12.10.2016 Bulletin 2016/41**

(51) Int Cl.:
**H04L 9/14** *(2006.01)* **G06F 21/62** *(2013.01)*
**H04L 9/08** *(2006.01)*

(21) Application number: **13898628.6**

(22) Date of filing: **02.12.2013**

(86) International application number:
**PCT/JP2013/082327**

(87) International publication number:
**WO 2015/083210 (11.06.2015 Gazette 2015/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Mitsubishi Electric Corporation Tokyo 100-8310 (JP)**

(72) Inventors:
• **ICHIKAWA, Sachihiro**
  **Tokyo 100-8310 (JP)**

• **OOTA, Hidenori**
  **Tokyo 108-0023 (JP)**
• **MATSUDA, Nori**
  **Tokyo 100-8310 (JP)**
• **MORI, Takumi**
  **Tokyo 100-8310 (JP)**

(74) Representative: **Pfenning, Meinig & Partner mbB Patent- und Rechtsanwälte Theresienhöhe 11a 80339 München (DE)**

(54) **DATA PROCESSING SYSTEM, ENCRYPTION APPARATUS, DECRYPTION APPARATUS, AND PROGRAM**

(57) An encrypted text transmitting apparatus 100 and a key generation apparatus 300 generate a first encryption key and a first decryption key for a first decryption algorithm, generate a second encryption key and a second decryption key for a second decryption algorithm, encrypt the first decryption key using the second encryption key according to an encryption algorithm associated with the second decryption algorithm to generate an encrypted first decryption key, and encrypt plaintext data using the first encryption key according to an encryption algorithm associated with the first decryption algorithm to generate encrypted text data. A key device 400 performs a decryption process of the encrypted first decryption key using the second decryption key according to the second decryption algorithm. An encrypted text receiving apparatus 200 performs a decryption process of the encrypted text data using the first decryption key decrypted by the key device 400, according to the first decryption algorithm.

Fig.11

**Description**

**Technical Field**

The present invention relates to a technology for encrypting and decrypting data.

**Background Art**

Various improvements and function expansions have been continuously made for a public key encryption method developed by Diffie and Hellman in 1976.

The public key encryption method referred to as ID (Identifier)-based encryption based on pairing presented by Boneh and Franklin in 2001, in particular, makes research on a pairing method to be vigorously made in recent years.

In 2010, functional encryption (Functional Encryption), which is a high-capability public key encryption method using pairing, was disclosed in Non-Patent Literature 1.

Unlike conventional encryption, the functional encryption is an algorithm whereby an encryption key may be expressed by a predicate and includes a capability equivalent to or higher than that of access control, for example.

Patent Literature 1 discloses a method in which electronic health record data is encrypted by ID-based encryption, using an identifier for the electronic health record data as an ID for the ID-based encryption.

Patent Literature 2 describes a method in which content is encrypted by predicate encryption.

Patent Literature 3 discloses a method in which a key shared by a plurality of terminal apparatuses is updated.

**Citation List**

**Patent Literature**

Patent Literature 1: JP 2011-521584A

Patent Literature 2: WO 2010-123122A1

Patent Literature 3: JP 2013-026747A

**Non-Patent Literature**

Non-Patent Literature 1: T. Okamoto, K. Takashima, "Fully Secure Functional Encryption With General Relations from the Decisional Linear Assumption", CRYPTO 2010, Lecture Notes In Computer Science, 2010, Volume 6223/2010.

**Summary of Invention**

**Technical Problem**

Since an algorithm for the ID-based encryption and an algorithm for the functional encryption are greatly different from an algorithm for the conventional encryption, there are the following problems.

Among existing encryption systems, there is a system employing a key device.

The key device is a storage medium such as an IC (Integrated Circuit) card to be given to a user, in which a decryption key is stored, and which performs a decryption process using the decryption key.

In the encryption system employing the key device, data encryption and decryption of encrypted text data are performed, using an algorithm supported by the key device.

For this reason, the data encryption and decryption of the encrypted text data cannot be performed, using an algorithm not supported by the key device.

That is, unless the key device supports the ID-based encryption or the functional encryption, the data encryption and the decryption of the encrypted text data using the ID-based encryption or the functional encryption cannot be performed.

In the encryption system as mentioned above, in order to introduce a new algorithm not supported by the currently used key device, the currently used key device needs to be collected, and instead of the currently used key device, a new key device that supports the new algorithm needs be given to the user.

Further, various operations need to be changed, in association with the giving and use of the new key device.

As described above, when the new algorithm is to be introduced into the encryption system employing the key device, a large burden is imposed on a system manager and the user.

Patent Literature 1 discloses a method in which the ID-based encryption and existing common key encryption are combined, but does not disclose a method employing a key device.

Patent Literature 2 discloses a method in which a secret key for predicate encryption is written into a key device, and decryption using the predicate encryption is performed, through the use of the secret key in the key device.

Therefore, even in the method in Patent Literature 2, a key device which does not support the predicate encryption needs to be collected, and instead of the key device which does not support the predicate encryption, the key device with the secret key for the predicate encryption stored therein needs to be given to a user.

Patent Literature 3 merely discloses a method in which data encryption is performed using a key updated by a key generation unit in a terminal apparatus as a sharing key, and does not disclose a method employing a key device.

The present invention has been conceived in view of the above-mentioned circumstances. It is a main object of the present invention to obtain a configuration in which, when a new algorithm is introduced into an environment using a predetermined algorithm for data encryption and decryption, the new algorithm may be introduced without adding alteration to a scheme provided for implementing the existing algorithm.

**Solution to Problem**

A data processing system according to the present invention may include:

a first decryption apparatus to perform a decryption process according to a first decryption algorithm;

a second decryption apparatus to perform a decryption process according to a second decryption algorithm different from the first decryption algorithm; and

an encryption apparatus to generate an encryption key and a decryption key for the first decryption algorithm as a first encryption key and a first decryption key, to generate an encryption key and a decryption key for the second decryption algorithm as a second encryption key and a second decryption key, to encrypt the first decryption key using the second encryption key according to an encryption algorithm associated with the second decryption algorithm to generate an encrypted first decryption key, and to encrypt plaintext data using the first encryption key according to an encryption algorithm associated with the first decryption algorithm to generate encrypted text data;

wherein the second decryption apparatus performs the decryption process of the encrypted first decryption key using the second decryption key according to the second decryption algorithm; and

wherein the first decryption apparatus performs the decryption process of the encrypted text data using the first decryption key decrypted by the second decryption apparatus according to the first decryption algorithm.

**Advantageous Effects of Invention**

According to the present invention, the first decryption algorithm may be newly introduced into an environment in which the second decryption algorithm is used, without adding alteration to the second decryption apparatus provided for implementing the second decryption algorithm.

**Brief Description of Drawings**

[Fig. 1] is a diagram illustrating a configuration example of a data processing system according to Embodiment 1.

[Fig. 2] is a flowchart diagram illustrating a key generation process by a key generation apparatus according to Embodiment 1.

[Fig. 3] is a flowchart diagram illustrating an encryption process by an encrypted text transmitting apparatus according to Embodiment 1.

[Fig. 4] is a flowchart diagram illustrating a decryption process by an encrypted text receiving apparatus according to Embodiment 1.

[Fig. 5] is a flowchart diagram illustrating a procedure by a key generation apparatus according to Embodiment 1 when a key device is lost.

[Fig. 6] is a flowchart diagram illustrating a procedure for changing an attribute of a user secret key by the key generation apparatus according to Embodiment 1.

[Fig. 7] is a diagram illustrating a configuration example of a data processing system according to Embodiment 2.

[Fig. 8] is a flowchart diagram illustrating a key generation process by a key generation apparatus according to Embodiment 2.

[Fig. 9] is a flowchart diagram illustrating an encryption process by an encrypted text transmitting apparatus according to Embodiment 2.

[Fig. 10] is a flowchart diagram illustrating a procedure for changing a predicate of a user secret key by the key generation apparatus according to Embodiment 2.

[Fig. 11] is a diagram illustrating a configuration example of a data processing system according to Embodiment 3.

[Fig. 12] is a flowchart diagram illustrating a key generation process by a key generation apparatus according to Embodiment 3.

[Fig. 13] is a flowchart diagram illustrating an encryption process by an encrypted text transmitting apparatus according to Embodiment 3.

[Fig. 14] is a flowchart diagram illustrating a procedure for changing an attribute and a predicate of a user secret key by the key generation apparatus according to Embodiment 3.

[Fig. 15] is a diagram illustrating a configuration example of a data processing system according to Embodiment 4.

[Fig. 16] is a flowchart diagram illustrating a key generation process by a key generation apparatus according to Embodiment 4.

[Fig. 17] is a flowchart diagram illustrating a procedure by the key generation apparatus according to Embodiment 4 when the key device is lost.

[Fig. 18] is a diagram illustrating a configuration example of a data processing system according to Embodiment 5.

[Fig. 19] is a flowchart diagram illustrating a key generation process by a key generation apparatus according to Embodiment 5.

[Fig. 20] is a flowchart diagram illustrating an encryption process by an encrypted text transmitting apparatus according to Embodiment 5.

[Fig. 21] is a flowchart diagram illustrating a procedure for changing an attribute of a user secret key by the key generation apparatus according to Embodiment 5.

[Fig. 22] is a diagram illustrating a configuration example of a data processing system according to Embodiment 6.

[Fig. 23] is a diagram illustrating an example of generation and transmission of keys according to Embodiment 1.

[Fig. 24] is a diagram illustrating an example of decryption of a key and data, according to Embodiment 1.

[Fig. 25] is a diagram illustrating a hardware configuration example of each of the encrypted text transmitting apparatus and so on according to Embodiments 1 to 6.

**Description of Embodiments**

In embodiments 1 to 6 that will be described below, a description will be given about a data processing system including a first decryption apparatus, a second decryption apparatus, and an encryption apparatus.

The first decryption apparatus and the encryption apparatus are each a computer, for example, and the second decryption apparatus is a key device (storage medium) connected to the first decryption apparatus, for example.

The encryption apparatus may be divided into an apparatus that generates a key and an apparatus that performs data encryption, as illustrated in Embodiments 1 to 6.

The first decryption apparatus performs a decryption process according to a first decryption algorithm.

The first decryption algorithm is a decryption logic for the ID-based encryption or the functional encryption, for example.

The second decryption apparatus performs a decryption process according to a second decryption algorithm different from the first decryption algorithm.

The second decryption algorithm is a decryption logic for RSA (Rivest Shamir Adleman) (registered trademark) encryption, for example.

The encryption apparatus generates an encryption key and a decryption key for the first decryption algorithm as a first encryption key and a first decryption key, and generates an encryption key and a decryption key for the second decryption algorithm as a second encryption key and a second decryption key.

The encryption apparatus encrypts the first decryption key using the second encryption key according to an encryption algorithm (second encryption algorithm) associated with the second decryption algorithm to generate an encrypted first decryption key.

Further, the encryption apparatus encrypts plaintext data (hereinafter also referred to just as a "plaintext") using the first encryption key according to an encryption algorithm (first encryption algorithm) associated with the first decryption algorithm to generate encrypted text data (hereinafter also referred to as an "encrypted text").

The first encryption algorithm is an encryption logic for the ID-based encryption or the functional encryption, for example.

The second encryption algorithm is an encryption logic for the RSA (registered trademark) encryption, for example.

The first encryption algorithm and the first decryption algorithm are also collectively referred to as a first algorithm.

Similarly, the second encryption algorithm and the second decryption algorithm are also collectively referred to as a second algorithm.

The first decryption apparatus receives the encrypted first decryption key and the encrypted text data transmitted from the encryption apparatus.

The second decryption key is written into the second decryption apparatus from the encryption apparatus.

The first decryption apparatus outputs the encrypted first decryption key to the second decryption apparatus.

The second decryption apparatus receives the encrypted first decryption key, performs the decryption process of the encrypted first decryption key using the second decryption key according to the second decryption algorithm, and outputs the first decryption key obtained by the decryption process to the first decryption apparatus.

The first decryption apparatus receives the first decryption key and performs the decryption process of the encrypted text data using the first decryption key according to the first decryption algorithm.

As described above, the first algorithm may be newly introduced into an environment in which the second algorithm is used, without adding alteration to the second decryption apparatus provided to implement the second algorithm.

Embodiment 1.

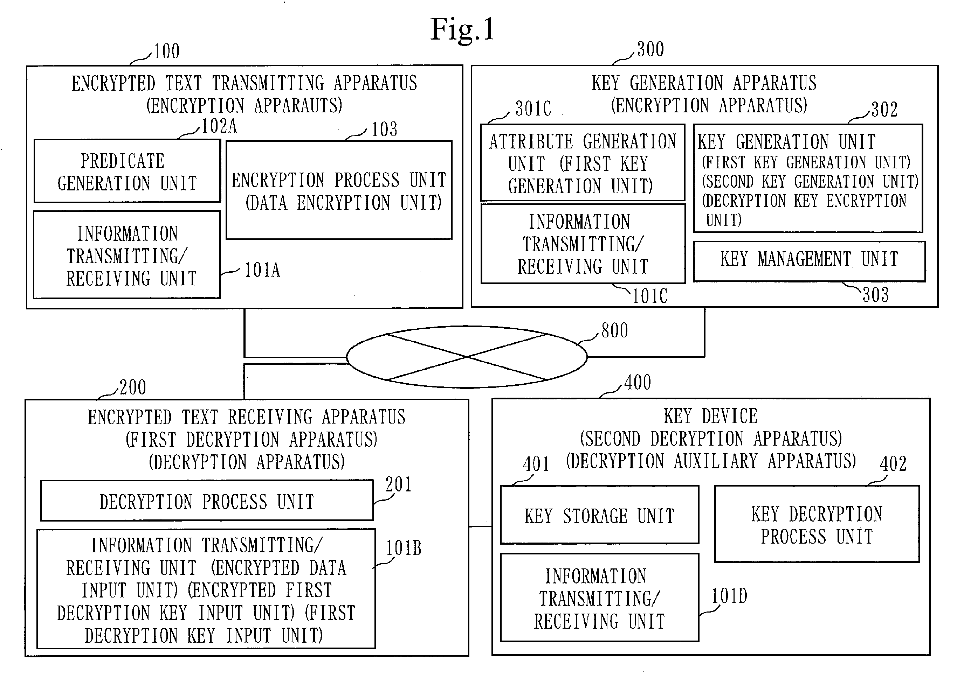

Fig. 1 illustrates a configuration example of a data processing system according to this embodiment.

In this embodiment, a description will be given about an example where a Ciphertext-Policy algorithm, which is one type of the functional encryption, is employed as the first algorithm, and an RSA (registered trademark) encryption algorithm is employed as the second algorithm

In the data processing system according to this embodiment, an encrypted text transmitting apparatus 100, an encrypted text receiving apparatus 200, and a key generation apparatus 300 are connected via an Internet 800. Further, a key device 400 is connected to the encrypted text receiving apparatus 200.

The encrypted text transmitting apparatus 100 encrypts plaintext data to generate encrypted text data, and transmits the encrypted text data.

The encrypted text receiving apparatus 200 receives the encrypted text data and performs a decryption process of the encrypted text data.

The key generation apparatus 300 generates keys for encryption and keys for decryption.

The key device 400 is connected to the encrypted text receiving apparatus 200.

The key device 400 is an IC card, for example. One of the keys necessary for the decryption process by the encrypted text receiving apparatus 200 is stored in the key device 400.

The encrypted text transmitting apparatus 100 and the key generation apparatus 300 correspond to an example of the encryption apparatus.

The encrypted text receiving apparatus 200 corresponds to an example of the first decryption apparatus and a decryption apparatus.

The key device 400 corresponds to an example of the second decryption apparatus and a decryption auxiliary apparatus.

An information transmitting/receiving unit 101A in the encrypted text transmitting apparatus 100 performs data transmission and data reception.

The information transmitting/receiving unit 101A receives one of the keys from the key generation apparatus 300 and transmits the encrypted text data to the encrypted text receiving apparatus 200, for example.

A predicate generation unit 102A receives a predicate source to generate a predicate object.

The predicate object is a parameter that is, together with an attribute object that will be described later, used for the functional encryption.

In the Ciphertext-Policy algorithm, the predicate object is embedded in the encrypted text data.

An encryption process unit 103 performs data encryption.

The encryption process unit 103 corresponds to an example of a data encryption unit.

An information transmitting/receiving unit 101B of the encrypted text receiving apparatus 200 performs data transmission and data reception.

The information transmitting/receiving unit 101B receives the encrypted text data from the encrypted text transmitting apparatus 100, for example.

The information transmitting/receiving unit 101B receives from the key device 400 one of the keys decrypted by the key device 400.

A decryption process unit 201 performs a decryption process of the encrypted text data to obtain the plaintext data.

The information transmitting/receiving unit 101B corresponds to an example of an encrypted data input unit, an encrypted first decryption key input unit, and a first decryption key input unit.

An attribute generation unit 301C of the key generation apparatus 300 receives an attribute source to generate the attribute object.

The attribute object is a parameter that is, together with the predicate object described above, used for the functional encryption.

In the Ciphertext-Policy algorithm, the attribute object is embedded in the one of the keys.

A key generation unit 302 generates the keys.

The key generation unit 302 also encrypts the keys generated.

A key management unit 303 manages the keys generated by the key generation unit 302.

An information transmitting/receiving unit 101C performs data transmission and data reception.

The information transmitting/receiving unit 101C transmits the one of the keys generated by the key generation unit 302 to the encrypted text transmitting unit 100, for example.

The key generation unit 302 corresponds to an example of a first key generation unit, a second key generation unit, and a decryption key encryption unit.

A key storage unit 401 of the key device 400 has a tamper-resistant capability, and stores the one of the keys.

A key decryption process unit 402 performs a decryption operation inside the key device 400, without leaking the key to an outside.

An information transmitting/receiving unit 101D performs data transmission and data reception.

The information transmitting/receiving unit 101D receives from the encrypted text receiving apparatus 200 the key that has been encrypted, and outputs the key obtained by the decryption operation by the key decryption process unit 402 to the encrypted text receiving apparatus 200.

The configuration illustrated in Fig. 1 is an example, and a different configuration from the configuration in Fig. 1 may be employed.

To take an example, the encryption process unit 103 of the encrypted text transmitting apparatus 100 may be provided at an apparatus different from the encrypted text transmitting apparatus 100.

Instead of the encryption process unit 103, a process module capable of performing both of encryption and decryption may also be disposed at the encrypted text transmitting apparatus 100.

Similarly, instead of the decryption process unit 201, a process module capable of performing both of encryption and decryption may also be disposed at the encrypted text receiving apparatus 200.

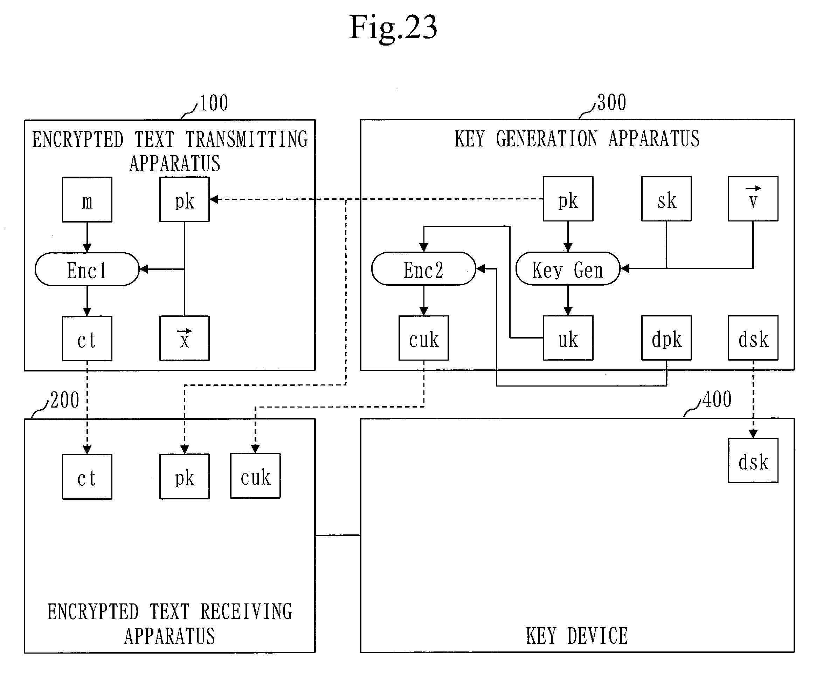

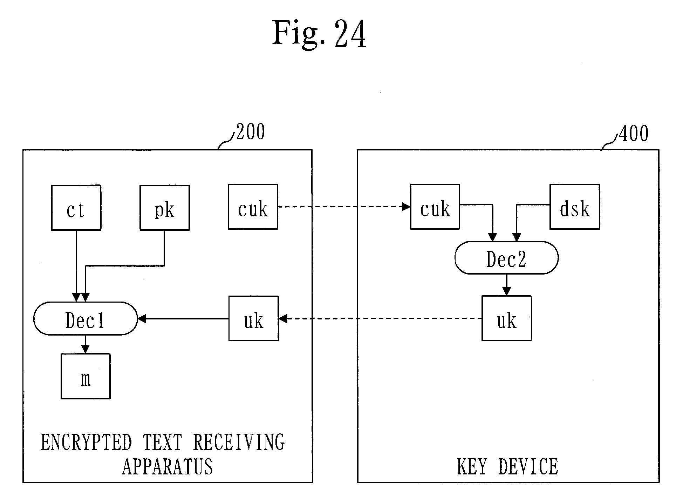

Now, a procedure for key generation and data encryption will be outlined, with reference to Fig. 23. A procedure for key decryption and data decryption will be outlined, with reference to Fig. 24.

In the key generation apparatus 300 in Fig. 23, the key generation unit 302 generates a master public key pk and a master secret key sk, and the attribute generation unit 301C generates an attribute object v.

The key generation unit 302 executes an operation KeyGen on the master public key pk, the master secret key sk, and the attribute object v to generate a user secret key uk.

The operation KeyGen is a key generation operation associated with the Ciphertext-Policy algorithm.

The user secret key uk is a key based on the Ciphertext-Policy algorithm.

In the Ciphertext-Policy algorithm, the attribute object v is embedded in the user secret key uk, and a predicate object x is embedded in encrypted text data.

The key generation unit 302 further generates a key device public key dpk and a key device secret key dsk based on the RSA (registered trademark) algorithm, for example.

The information transmitting/receiving unit 101C transmits the master public key pk to the encrypted text transmitting apparatus 100, and the information transmitting/receiving unit 101A of the encrypted text transmitting apparatus 100 receives the master public key pk.

The key management unit 303 of the key generation apparatus 300 stores the key device secret key dsk in the key storage unit 401 of the key device 400.

The key device 400 with the key device secret key dsk stored therein is given to a user who uses the encrypted text receiving apparatus 200, and is connected to the encrypted text receiving apparatus 200.

The encryption process unit 103 of the encrypted text transmitting apparatus 100 that has received the master public key pk executes an operation Enc1 using the master public key pk and the predicate object x to encrypt plaintext data m, thereby generating encrypted text data ct.

The operation Enc1 is an encryption operation associated with the Ciphertext-Policy algorithm.

Then, the information transmitting/receiving unit 101A transmits the encrypted text data ct to the encrypted text receiving apparatus 200.

The key generation unit 302 of the key generation apparatus 300 executes an operation Enc2 using the key device public key dpk to encrypt the user secret key uk, thereby generating an encrypted user secret key cuk.

The operation Enc2 is an encryption operation associated with the RSA (registered trademark) encryption algorithm. Then, the information transmitting/receiving unit 101C transmits the encrypted user secret key cuk and the master public key pk to the encrypted text receiving apparatus 200.

The information transmitting/receiving unit 101B of the encrypted text receiving apparatus 200 receives the encrypted text data ct, the encrypted user secret key cuk, and the master public key pk.

Now, referring to Fig. 24, the information transmitting/receiving unit 101B of the encrypted text receiving apparatus 200 outputs the encrypted user secret key cuk to the key device 400.

The information transmitting/receiving unit 101D of the key device 400 receives the encrypted user secret key cuk.

Subsequently, the key decryption process unit 402 executes an operation Dec2 on the encrypted user secret key cuk, using the key device secret key dsk to obtain the user secret key uk as a result of decryption.

The operation Dec2 is a decryption process operation associated with the RSA (registered trademark) encryption algorithm.

Then, the information transmitting/receiving unit 101D outputs the user secret key uk to the encrypted text receiving apparatus 200.

The information transmitting/receiving unit 101B of the encrypted text receiving apparatus 200 receives the user secret key uk.

Then, the decryption process unit 201 executes an operation Dec1 on the encrypted text data ct, using the master public key pk and the user secret key uk to obtain the plaintext data m as a result of decryption.

The operation Dec1 is a decryption process operation associated with the Ciphertext-Policy algorithm.

Referring to Fig. 23, the master public key pk and the predicate object x are used for encrypting the plaintext data m, and correspond to a first encryption key.

The user secret key uk is used for the decryption process of the encrypted text data ct, and corresponds to a first decryption key.

The key device public key dpk is used for encrypting the user secret key uk and corresponds to a second encryption key.

The key device secret key dsk is used for the decryption process of the encrypted user secret key cuk and corresponds to a second decryption key.

In this embodiment, key transfer is made from the key generation apparatus 300 to the encrypted text transmitting apparatus 100, from the encrypted text transmitting apparatus 100 to the encrypted text receiving apparatus 200, and from the key generation apparatus 300 to the encrypted text receiving apparatus 200, through transmission via the Internet 800.

Instead of this transfer, the keys may be stored in an IC card or the like, and the IC card with the keys stored therein may be distributed to the encrypted text transmitting apparatus 100 and the encrypted text receiving apparatus 200, thereby making the key transfer.

Though a description will be given about key transmission and key reception using the Internet 800 in Embodiments 2 to 6 as well, key transfer may be similarly made by distribution of the IC card or the like in Embodiments 2 to 6 as well.

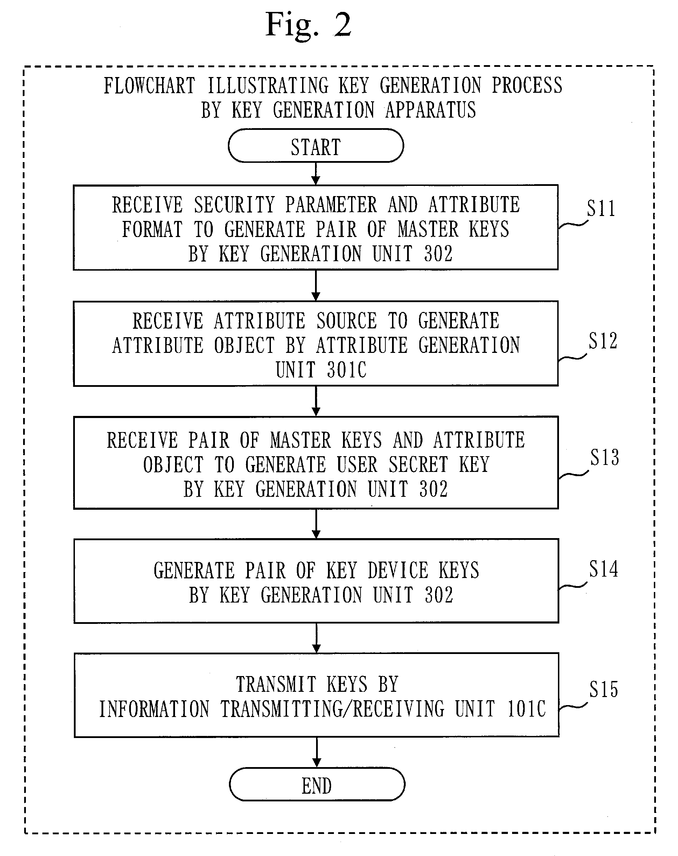

Now, details of a key generation process by the key generation apparatus 300 will be described, with reference to Fig. 2.

As described above, the key generation unit 302 of the key generation apparatus 300 generates the various keys.

In this embodiment, the key generation unit 302 generates the master public key pk and the master secret key sk that form a pair, the user secret key uk, the key device secret key dsk and the key device public key dpk to be stored in the key device 400.

These keys may be generated by one key generation unit or a plurality of the key generation units.

The key generation unit 302 generates a pair of the master keys (the master public key pk and the master secret key sk), using the following Expression 1, for example (S11):

[Formula 1]

$$\left(pk, sk\right) \xleftarrow{\quad R \quad} Setup\left(1^{\lambda}, \vec{n}\right) \qquad \text{Expression 1}$$

As expressed above, the key generation unit 302 executes an operation Setup on a security parameter $1^{\lambda}$ and an attribute format n to generate the master public key pk and the master secret key sk.

The attribute generation unit 301C receives an attribute source to generate the attribute object v (S12).

The attribute source is attribute information capable of being understood by a user, and the attribute object v is attribute information capable of being used for the operation KeyGen.

An attribute conversion rule for converting the attribute source into the attribute object v is provided with the attribute generation unit 301C.

The key generation apparatus 300 may receive the attribute source from a system manager or from a different apparatus.

Subsequently, the key generation unit 302 receives the master public key pk, the master secret key sk, and the attribute object v to generate the user secret key uk (S13).

The key generation unit 302 executes the operation KeyGen on the master public key pk, the master secret key sk, and the attribute object v to generate the user secret key uk, as expressed by the following Expression 2, for example:

[Formula 2]

$$\left( uk \right) \xleftarrow{\quad R \quad} KeyGen\left( pk, sk, \vec{v} \right) \qquad \text{Expression 2}$$

Then, the key generation unit 302 generates a pair of the key device keys (the key device public key dpk and the key device secret key dsk) to be stored in the key device 400 (S 14).

Specifically, the key generation unit 302 generates the pair of the key device keys, using the RSA (trademark) encryption algorithm.

Subsequently, the information transmitting/receiving unit 101C transmits the keys generated by the key generation unit 302 (S 15).

As illustrated in Fig. 23, the information transmitting/receiving unit 101C transmits the master public key pk to the encrypted text transmitting apparatus 100.

Preferably, key transmission from the key generation apparatus 300 to the encrypted text transmitting apparatus 100 is performed, using a secure communication path with integrity.

Unless the secure communication path is employed, a countermeasure is needed where an appropriate signature is given so as not to tamper the key.

The key management unit 303 writes the key device secret key dsk into the key device 400.

The key device 400 into which the key device secret key dsk is written is given to the user of the encrypted text receiving apparatus 200.

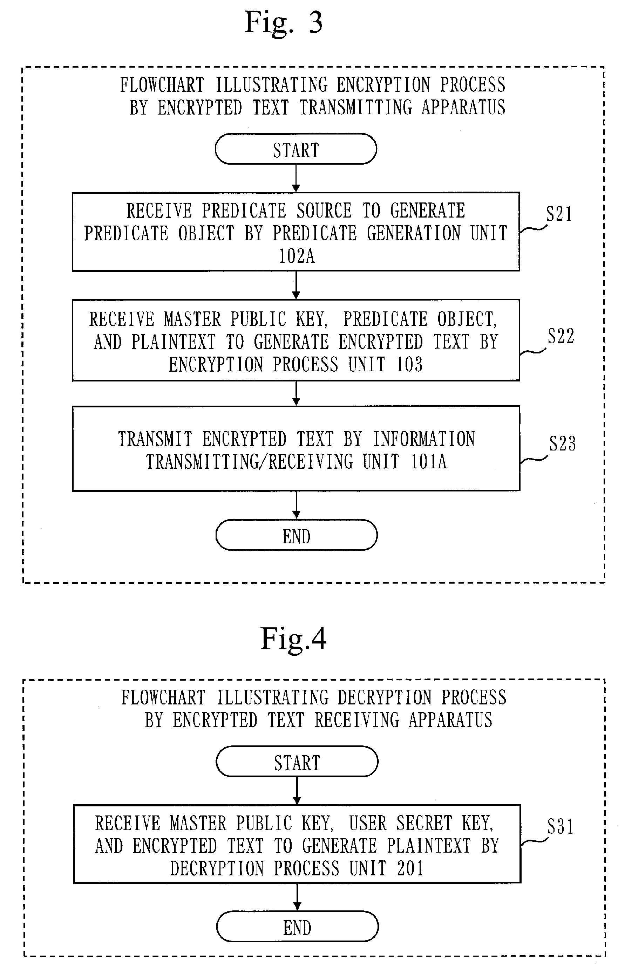

Now, details of an encryption process by the encrypted text transmitting apparatus 100 will be described, with reference to Fig. 3.

The predicate generation unit 102A of the encrypted text transmitting apparatus 100 first receives a predicate source to generate the predicate object x (S21).

The predicate source is predicate information capable of being understood by the user, and the predicate object x is predicate information capable of being used for the operation Enc1

A predicate conversion rule for converting the predicate source into the predicate object x is provided with the predicate generation unit 102A.

Subsequently, the encryption process unit 103 executes the operation Enc1 on the plaintext data m, using the master public key pk and the predicate object x to generate the encrypted text data ct, as expressed by the following Expression 3:

[Formula 3]

$$\left( ct \right) \xleftarrow{\quad R \quad} Enc1\left( pk, \vec{x}, m \right) \qquad \text{Expression 3}$$

Then, the information transmitting/receiving unit 101A transmits the encrypted text data ct to the encrypted text receiving apparatus 200 (S23).

Now, details of a decryption process by the encrypted text receiving apparatus 200 will be described, with reference to Fig. 4.

For example, when the encrypted text receiving apparatus 200 receives the encrypted text data ct from the encrypted text transmitting apparatus 100, the encrypted text receiving apparatus 200 requests transmission of the master public key pk and the encrypted user secret key cuk to the key generation apparatus 300.

Upon receipt of the request from the encrypted text receiving apparatus 200, the key generation unit 302 of the key generation apparatus 300 encrypts the user secret key uk, using the key device public key dpk to generate the encrypted user secret key cuk. Then, the information transmitting/receiving apparatus 101C of the key generation apparatus 300 transmits the master public key pk and the encrypted user secret key cuk to the encrypted text receiving apparatus 200.

The encrypted text receiving apparatus 200 receives the encrypted user secret key cuk, in this manner. The encrypted user secret key cuk is, however, the user secret key uk encrypted, using the key device public key dpk. The encrypted user secret key cuk therefore cannot be used for the decryption process of the encrypted text data ct.

For this reason, the information transmitting/receiving unit 101B outputs the encrypted user secret key cuk to the key device 400 to cause the key decryption process unit 402 to execute the decryption process of the encrypted user secret key cuk, using the key device secret key dsk in the key storage unit 401 to obtain the user secret key uk through the information transmitting/receiving unit 101D.

The key decryption process unit 402 may perform authentication of the encrypted text receiving apparatus 200 before the key decryption process unit 402 performs the decryption process of the encrypted user secret key cuk.

To take an example, the key decryption process unit 402 may request input of a PIN (Personal Identification Number) for the authentication to the encrypted text receiving apparatus 200.

Then, only when a PIN registered in the key device 400 is the same as the PIN from the encrypted text receiving apparatus 200, the key decryption process unit 402 performs the decryption process of the encrypted user secret key cuk.

When the information transmitting/receiving unit 101B receives the user secret key uk from the key device 400, the decryption process unit 201 executes the operation Dec1 on the encrypted text data ct, using the master public key pk and the user secret key uk to obtain the plaintext data m, as expressed in the following Expression 4:

$$m = \mathrm{Dec1}\ (pk,\ uk,\ ct) \qquad \text{Expression 4}$$

The above description has been given about an example where, upon receipt of the request from the encrypted text receiving apparatus 200, the key generation apparatus 300 generates the encrypted user secret key cuk. The key generation apparatus 300 may generate the encrypted user secret key cuk before receipt of the request from the encrypted text receiving apparatus 200.

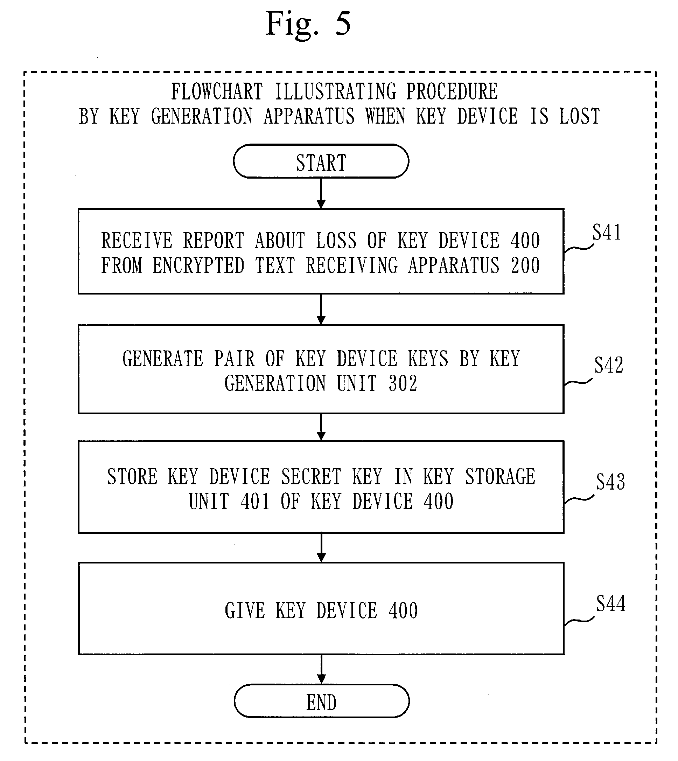

Now, with reference to Fig. 5, a description will be given about a procedure when the key device 400 is lost.

When the key device 400 is lost, a key device 400 needs to be reissued.

Further, it is necessary to prevent abuse of the key device 400.

When the loss of the key device 400 is reported from the encrypted text receiving apparatus 200 (or the user of the encrypted text receiving apparatus 200) to the key generation apparatus 300 (S41), the key generation apparatus 300 generates a new key device secret key dsk' and a new key device public key dpk' to be stored in the new key device 400 (S42).

A procedure for generating the new key device secret key dsk' and the new key device public key dpk' is the same as the procedure described above for generating the key device secret key dsk and the key device public key dpk.

Then, the key management unit 303 stores the new key device secret key dsk' in the key storage unit 401 of the new key device 400 (S43), and the new key device 400 with the new key device secret key dsk' stored therein is given to the user of the encrypted text receiving apparatus 200 (S44).

Thereafter, the new key device public key dpk' is used for generation of the encrypted user secret key cuk.

When the key device secret key dsk and the encrypted user secret key cuk stored in the key storage unit 401 of the lost key device 400 are held in the key generation apparatus 300, the key generation unit 302 may perform the decryption process of the encrypted user secret key cuk, using the key device secret key dsk.

Then, the key generation unit 302 may encrypt the user secret key uk again, using the new key device public key dpk'.

When the key device secret key dsk and the encrypted user secret key cuk are not held, the key generation unit 302 generates the user secret key uk, using the master public key pk, the master secret key sk, and the attribute object v.

In this case, at least one of the master public key pk, the master secret key sk, and the attribute object v may be changed.

When the at least one of the master public key pk, the master secret key sk, and the attribute object v is changed, the change needs to be notified to the system manager.

Herein, the description has been given about the example in which the key device secret key dsk and the key device public key dpk are updated when the key device 400 is lost.

The key device secret key dsk and the key device public key dpk may be updated at a different update timing such as when the key device 400 is damaged as well as when the key device 400 is lost.

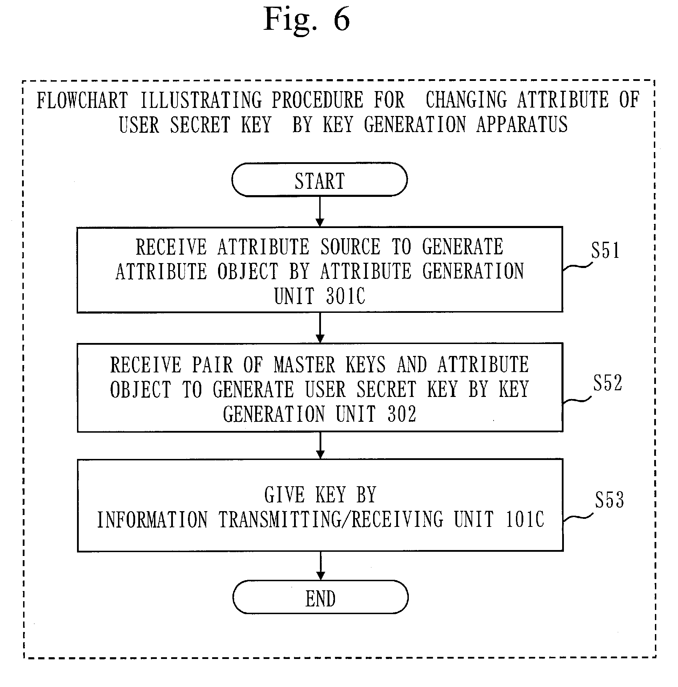

Now, with reference to Fig. 6, a description will be given about a procedure when the attribute source of the encrypted text receiving apparatus 200 is changed.

When the attribute source is changed, it is necessary for the key generation apparatus 300 to reissue a user secret key uk.

When the change of the attribute source is reported from the encrypted text receiving apparatus 200 (or the user of the encrypted text receiving apparatus 200) to the key generation apparatus 300, the attribute generation unit 301 of the key generation apparatus 300 generates a new attribute object v' from a changed attribute source (S51).

Then, the key generation unit 302 generates a new user secret key uk', using the master public key pk, the master secret key sk, and the new attribute object v' (S52).

When the user secret key uk before the change of the attribute source is held, the key generation unit 302 deletes the user secret key uk.

Then, the information transmitting/receiving unit 101C transmits the new user secret key uk' or a new encrypted user secret key cuk' (S53).

That is, the key generation unit 302 generates the new encrypted user secret key cuk' by encrypting the new user secret key uk' using the key device public key dpk.

Then, the information transmitting/receiving unit 101C transmits the new encrypted user secret key cuk' to the encrypted text receiving apparatus 200.

When the predicate source is changed, the change of the predicate source is reported from the encrypted text receiving apparatus 200 to the encrypted text transmitting apparatus 100, and the predicate generation unit 102A generates a new predicate object x' from a predicate source after the change.

Then, the encryption process unit 103 encrypts the plaintext data m, using the new predicate object x' and the master public key pk.

As described above, in this embodiment, the first algorithm (Cipher text-Policy of the functional encryption) may be newly introduced into an environment in which the key device supporting the second algorithm (RSA (registered trademark) encryption) is used, without adding alteration to the key device.

Embodiment 2.

In this embodiment a description will be given about an example where a Key-Policy algorithm, which is one type of the functional encryption, is introduced into an environment in which the key device supporting the RSA (registered trademark) encryption algorithm is used.

In the Ciphertext-Policy algorithm described in Embodiment 1, the attribute object v is embedded in the user secret key uk, and the predicate object x is embedded in the encrypted text data ct. In the Key-Policy algorithm that will be described in this embodiment, a predicate object x is embedded in a user secret key uk, and an attribute object v is embedded in encrypted text data ct.

That is, in this embodiment, the predicate object x is used in place of the attribute object v in Fig. 23 to generate the user secret key uk, and the attribute object v is used in place of the predicate object x to generate the encrypted text data ct.

In this embodiment, a key generation operation associated with the Key-Policy algorithm is executed in the operation KeyGen in Fig. 23.

An encryption operation associated with the Key-Policy algorithm is executed in the operation Enc1.

A decryption process operation associated with the Key-Policy algorithm is executed in the operation Dec1 in Fig. 24.

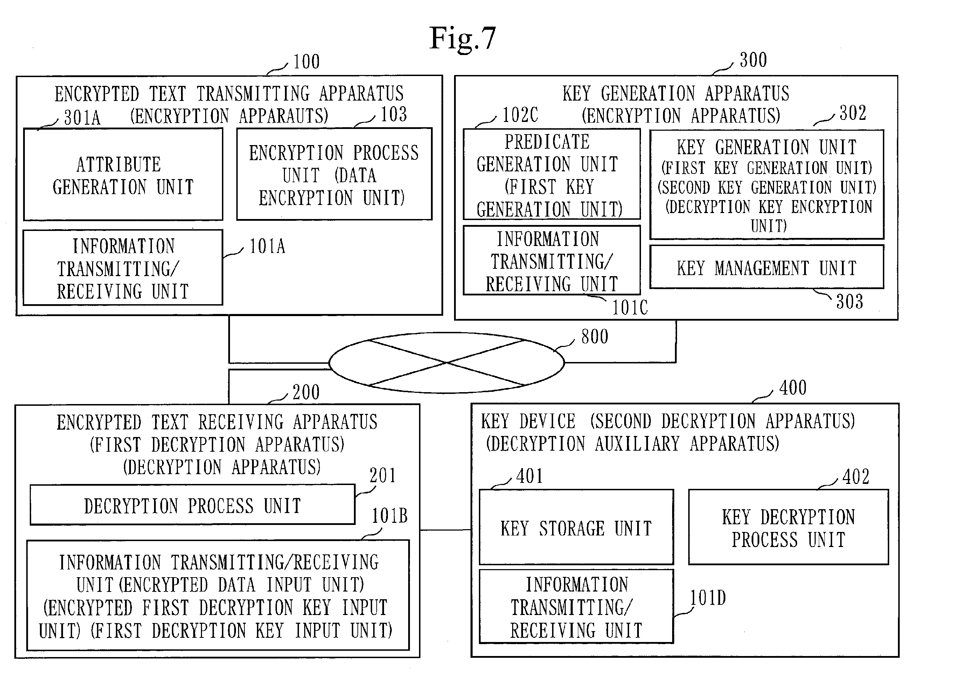

Fig. 7 illustrates a configuration example of a data processing system according to this embodiment.

In the Ciphertext-Policy algorithm described in Embodiment 1, the attribute object v is embedded in the user secret key uk and the predicate object x is embedded in the encrypted text data ct. Thus, the attribute generation unit 301C is disposed at the key generation apparatus 300, and the predicate generation unit 102A is disposed at the encrypted text transmitting apparatus 100, as illustrated in Fig. 1.

In the Key-Policy algorithm that will be described in this embodiment, the predicate object x is embedded in the user secret key uk, and the attribute object v is embedded in the encrypted text data ct. Thus, a predicate generation unit 102C is disposed at the key generation apparatus 300, and an attribute generation unit 301A is disposed at the encrypted text transmitting apparatus 100, as illustrated in Fig. 7.

Like the predicate generation unit 102A in Fig. 1, the predicate generation unit 102C generates the predicate object x from a predicate source.

Like the attribute generation unit 301C in Fig. 1, the attribute generation unit 301A generates the attribute object v from an attribute source.

Among elements illustrated in Fig. 7, the elements other than the predicate generation unit 102C and the attribute generation unit 301A are the same as those illustrated in Fig. 1. Thus, a description will be omitted.

A difference from Embodiment 1 will be mainly described below

A matter that is not described below is the same as that in Embodiment 1.

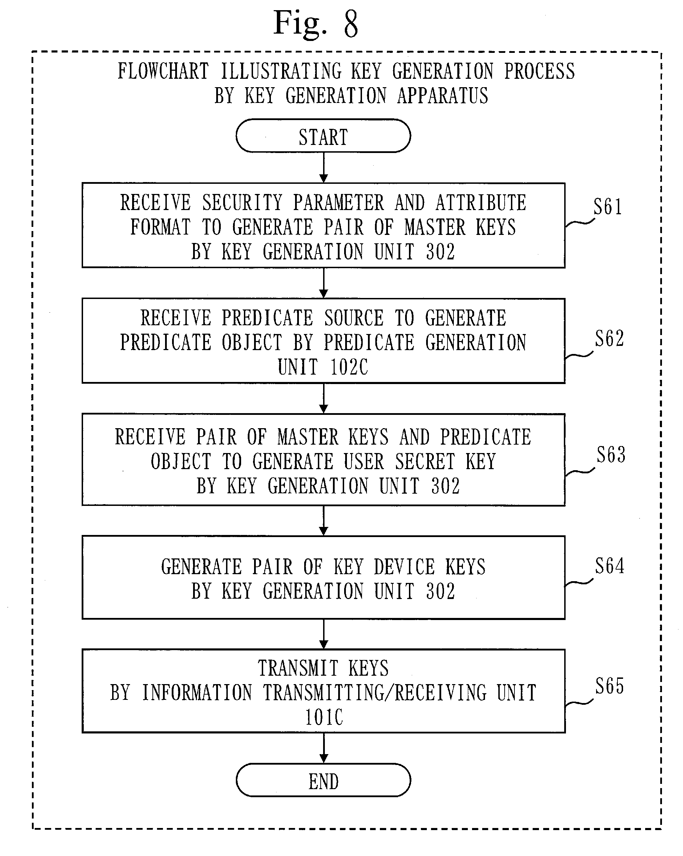

Now, details of a key generation process by the key generation apparatus 300 will be described, with reference to Fig. 8.

The key generation unit 302 generates a pair of master keys (a master public key pk and a master secret key sk), according to the same procedure as that in S11 in Fig. 2 (S61).

Subsequently, the predicate generation unit 102C receives the predicate source to generate the predicate object x (S62).

The predicate source is predicate information capable of being understood by a user, and the predicate object x is predicate information capable of being used for the operation KeyGen.

A predicate conversion rule for converting the predicate source into the predicate object is provided with the predicate generation unit 102C.

The key generation apparatus 300 may receive the predicate source from a system manager, or from a different apparatus.

Then, the key generation unit 302 receives the master public key pk, the master secret key sk, and the predicate object x to generate the user secret key uk (S63).

To take an example, the key generation unit 302 executes the operation KeyGen on the master public key pk, the master secret key sk, and the predicate object x to generate the user secret key uk, as expressed by the following Expression 5:

[Formula 4]

$$\left(uk\right) \xleftarrow{\quad R \quad} KeyGen\left(pk, sk, \vec{x}\right) \qquad \text{Expression 5}$$

Subsequently, the key generation unit 302 generates a pair of key device keys (a key device public key dpk and a key device secret key dsk) according to the same procedure as that in S14 in Fig. 2 (S64).

Then, the information transmitting/receiving unit 101C transmits the keys generated by the key generation unit 302 according to the same procedure as that in S15 in Fig. 2 (S65).

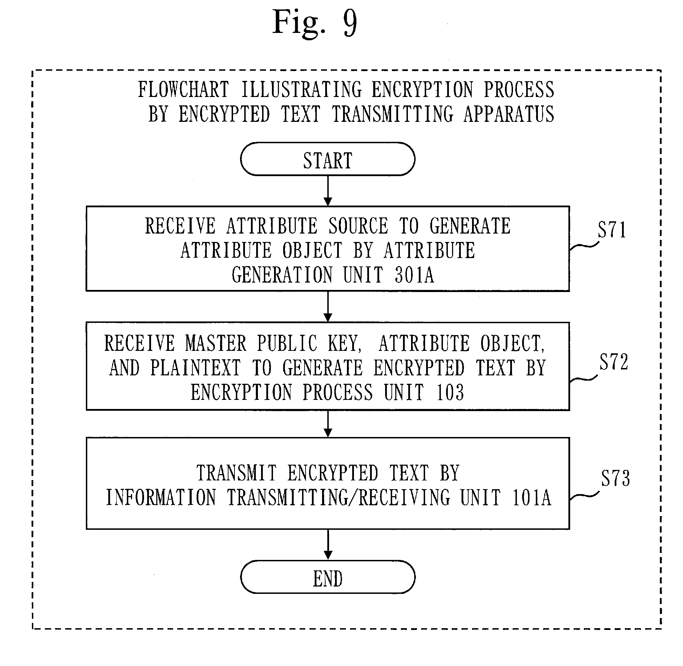

Now, details of an encryption process by the encrypted text transmitting apparatus 100 will be described, with reference to Fig. 9.

The attribute generation unit 301A of the encrypted text transmitting apparatus 100 first receives the attribute source to generate the attribute object v(S71).

The attribute source is attribute information capable of being understood by the user, and the attribute object v is attribute information capable of being used for the operation Enc1

An attribute conversion rule for converting the attribute source into the attribute object v is provided with the attribute generation unit 301A.

The encrypted text transmitting apparatus 100 may receive the attribute source from the system manager or from a different apparatus.

Subsequently, the encryption process unit 103 executes the operation Enc1 on plaintext data m, using the master public key pk and the attribute object v to generate the encrypted text data ct, as expressed by the following Expression 6:

[Formula 5]

$$\left(ct\right) \xleftarrow{\quad R \quad} Enc1\left(pk, \vec{v}, m\right) \qquad \text{Expression 6}$$

Then, the information transmitting/receiving unit 101A transmits the encrypted text data ct to the encrypted text receiving apparatus 200, as in S23 in Fig. 3 (S73).

Since a decryption process by the encrypted text receiving apparatus 200 is the same as that illustrated in Embodiment 1 (Fig. 4), a description will be omitted.

A procedure when the key device 400 is lost is the same as that illustrated in Embodiment 1 (Fig. 5) except the following point.

In Embodiment 1, when the key device secret key dsk and the encrypted user secret key cuk stored in the lost key device 400 are not held, the key generation unit 302 generates the user secret key uk, using the master public key pk, the master secret key sk, and the attribute object v.

In this embodiment, the key generation unit 302 generates the user secret key uk, using the master public key pk, the master secret key sk, and the predicate object x.

In this case, at least one of the master public key pk, the master secret key sk, and the predicate object x may be changed.

When at least one of the master public key pk, the master secret key sk, and the predicate object x is changed, the change needs to be notified to the system manager.

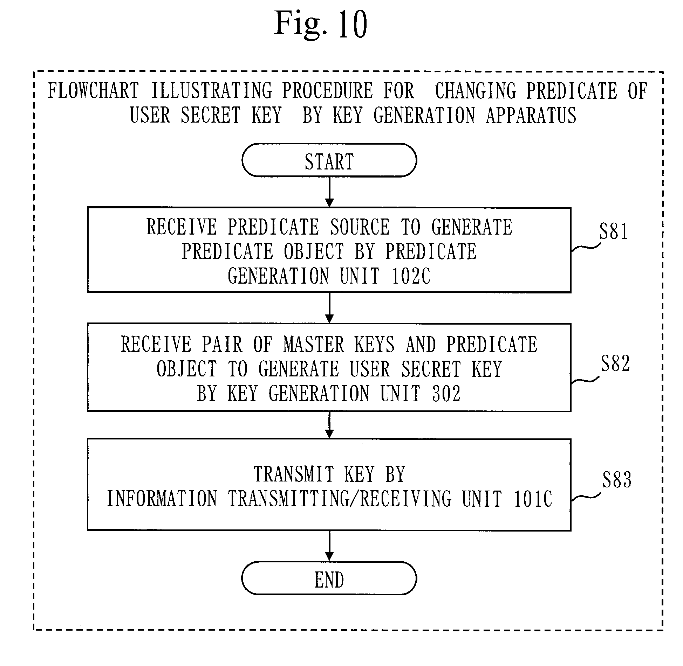

Now, with reference to Fig. 10, a description will be given about a procedure when the predicate source of the encrypted text receiving apparatus 200 is changed,.

When the predicate source is changed, it is necessary for the key generation apparatus 300 to reissue a user secret key uk.

When the change of the predicate source is reported from the encrypted text receiving apparatus 200 (or the user of the encrypted text receiving apparatus 200) to the key generation apparatus 300, the predicate generation unit 102C of the key generation apparatus 300 generates a new predicate object x' from a changed predicate source (S81).

Then, the key generation unit 302 generates a new user secret key uk', using the master public key pk, the master secret key sk, and the new predicate object x' (S82).

When the user secret key uk before the change of the predicate source is held, the key generation unit 302 deletes the user secret key uk.

The key generation apparatus 300 encrypts the new user secret key uk' to generate a new encrypted user secret key cuk', as indicated in Embodiment 1.

Then, the information transmitting/receiving unit 101C transmits the new encrypted user secret key cuk' according to the same procedure as that in S53 in Fig. 6 (S83).

When the attribute source is changed, the change of the attribute source is reported from the encrypted text receiving apparatus 200 to the encrypted text transmitting apparatus 100. The attribute generation unit 301A generates a new attribute object v' from an attribute source after the change.

Then, the encryption process unit 103 encrypts the plaintext data m, using the new attribute object v' and the master public key pk.

As described above, in this embodiment, the first algorithm (Key-Policy of the functional encryption) may be newly introduced into the environment in which the key device supporting the second algorithm (RSA (registered trademark) encryption) is used, without adding alteration to the key device.

Embodiment 3.

In this embodiment, a description will be given about an example where a Unified-Policy algorithm, which is one type of the functional encryption, is introduced into an environment in which the key device supporting the RSA (registered trademark) encryption algorithm is used.

In the Ciphertext-Policy algorithm described in Embodiment 1, the attribute object v is embedded in the user secret key uk, and the predicate object x is embedded in the encrypted text data ct.

In the Key-Policy algorithm described in Embodiment 2, the predicate object x is embedded in the user secret key uk, and the attribute object v is embedded in the encrypted text data ct.

In the Unified-Policy algorithm described in this embodiment, an attribute object $v_1$ and a predicate object $x_2$ are embedded in a user secret key uk, and a predicate object $x_1$ and an attribute object $v_2$ are embedded in encrypted text data ct.

The attribute object $v_1$ and the predicate object $x_1$ form a pair, and the attribute object $v_2$ and the predicate object $x_2$ also form a pair.

In this embodiment, the attribute object $v_1$ and the predicate object $x_2$ are used in place of the attribute object v in Fig. 23 to generate the user secret key uk, and the attribute object $v_2$ and the predicate object $x_1$ are used in place of the predicate object x to generate the encrypted text data ct.

In this embodiment, a key generation operation associated with the Unified-Policy algorithm is executed in the operation KeyGen in Fig. 23.

Further, an encryption operation associated with the Unified-Policy algorithm is executed in the operation Enc1

Further, a decryption process operation associated with the Unified-Policy algorithm is executed in the operation Dec1 in Fig. 24.

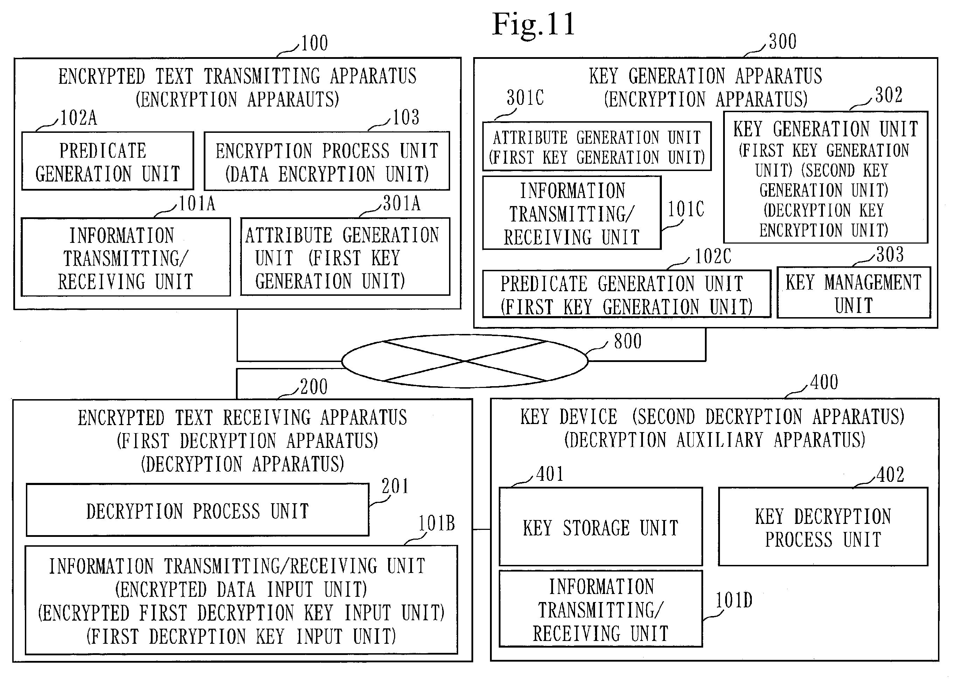

Fig. 11 illustrates a configuration example of a data processing system according to this embodiment.

In the Unified-Policy algorithm that will be described in this embodiment, the attribute object $v_1$ and the predicate object $x_2$ are embedded in the user secret key uk, and the attribute object $v_2$ and the predicate object $x_1$ are embedded in the encrypted text data ct. Thus, as illustrated in Fig. 11, the predicate generation unit 102C and the attribute generation unit 301C are disposed at the key generation apparatus 300, and the predicate generation unit 102A and the attribute generation unit 301A are disposed at the encrypted text transmitting apparatus 100.

The attribute generation unit 301C generates the attribute object $v_1$ from an attribute source 1.

The predicate generation unit 102C generates the predicate object $x_2$ from a predicate source 2.

The attribute generation unit 301A generates the attribute object $v_2$ from an attribute source 2.

The predicate generation unit 102A generates the predicate object $x_1$ from a predicate source 1.

Among elements illustrated in Fig. 11, the elements other than the predicate generation unit 102C and the attribute generation unit 301C and the predicate generation unit 102A and the attribute generation unit 301A are the same as those illustrated in Fig. 1. Thus, a description will be omitted.

A difference from Embodiment 1 will be mainly described below.

A matter that is not described below is the same as that in Embodiment 1.

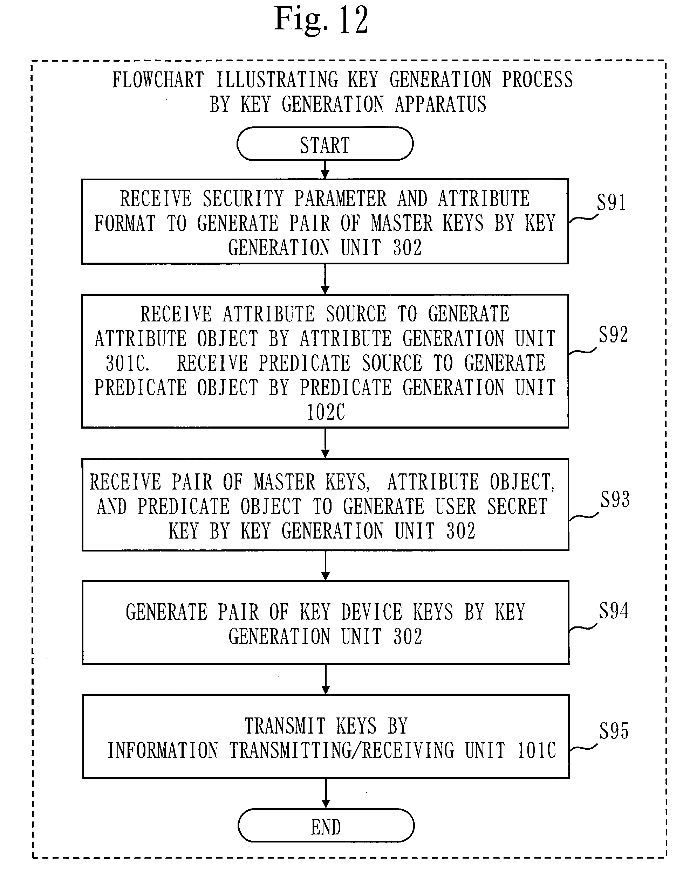

Now, with reference to Fig. 12, details of a key generation process by the key generation apparatus 300 will be described.

The key generation unit 302 generates a pair of master keys (a master public key pk and a master secret key sk) according to the same procedure as that in S11 in Fig. 2 (S91).

Subsequently, the attribute generation unit 301C receives the attribute source 1 to generate the attribute object $v_1$, and the predicate generation unit 102C receives the predicate source 2 to generate the predicate object $x_2$ (S92).

Then, the key generation unit 302 receives the master public key pk, the master secret key sk, the attribute object $v_1$, and the predicate object $x_2$ to generate the user secret key uk (S93).

To take an example, the key generation unit 302 executes the operation KeyGen on the master public key pk, the master secret key sk, the attribute object $v_1$, and the predicate object $x_2$ to generate the user secret key uk, as expressed by the following Expression 7:

[Formula 6]

$$\left(uk\right) \xleftarrow{\quad R \quad} KeyGen\left(pk, sk, \vec{v}_1, \vec{x}_2\right) \qquad \text{Expression 7}$$

Subsequently, the key generation unit 302 generates a pair of key device keys (a key device public key dpk and a key device secret key dsk), according to the same procedure as that in S 14 in Fig. 2 (S94).

Then, the information transmitting/receiving unit 101C transmits the keys generated by the key generation unit 302, according to the same procedure as that in S15 in Fig. 2 (S95).

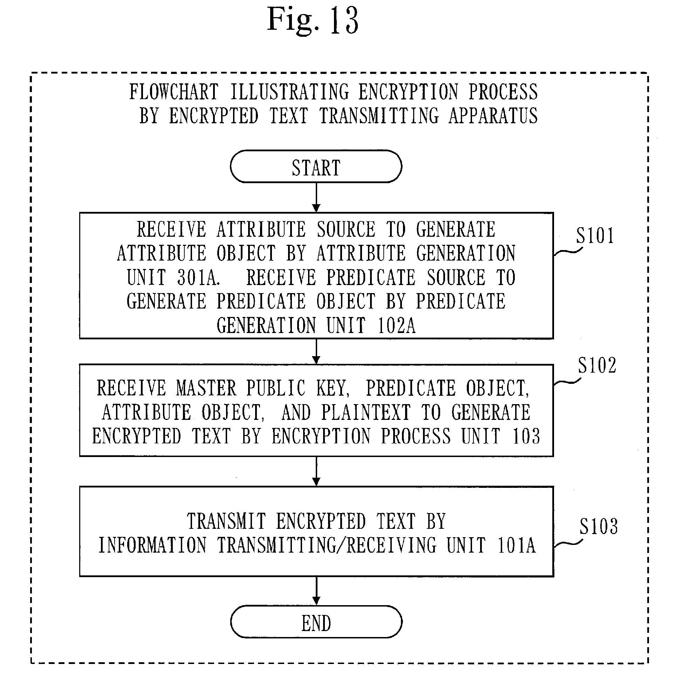

Now, with reference to Fig. 13, details of an encryption process by the encrypted text transmitting apparatus 100 will be described.

The attribute generation unit 301A of the encrypted text transmitting apparatus 100 first receives the attribute source 2 to generate the attribute object $v_2$, and the predicate generation unit 102A of the encrypted text transmitting apparatus 100 receives the predicate source 1 to generate the predicate object $x_1$ (S101).

Subsequently, the encryption process unit 103 executes the operation Enc1 on plaintext data m, using the master public key pk, the predicate object $x_1$, and the attribute object $v_2$ to generate the encrypted text data ct, as expressed by the following Expression 8:

[Formula 7]

$$\left(ct\right) \xleftarrow{\quad R \quad} Enc1\left(pk, \vec{x}_1, \vec{v}_2, m\right) \qquad \text{Expression 8}$$

Then, the information transmitting/receiving unit 101A transmits the encrypted text data ct to the encrypted text receiving apparatus 200, as in S23 in Fig. 3 (S103).

Since a decryption process by the encrypted text receiving apparatus 200 is the same as that illustrated in Embodiment 1 (Fig. 4), a description will be omitted.

A procedure when the key device 400 is lost is the same as that illustrated in Embodiment 1 (Fig. 5) except the following point.

In Embodiment 1, when the key device secret key dsk and the encrypted user secret key cuk stored in the key device 400 lost are not held, the key generation unit 302 generates the user secret key uk, using the master public key pk, the master secret key sk, and the attribute object v.

In this embodiment, the key generation unit 302 generates the user secret key uk, using the master public key pk, the master secret key sk, the attribute object $v_1$, and the predicate object $x_2$.

In this case, at least one of the master public key pk, the master secret key sk, the attribute object $v_1$, and the predicate object $x_2$ may be changed.

When at least one of the master public key pk, the master secret key sk, the attribute object $v_1$, and the predicate object $x_2$ is changed, the change needs to be notified to a system manager.

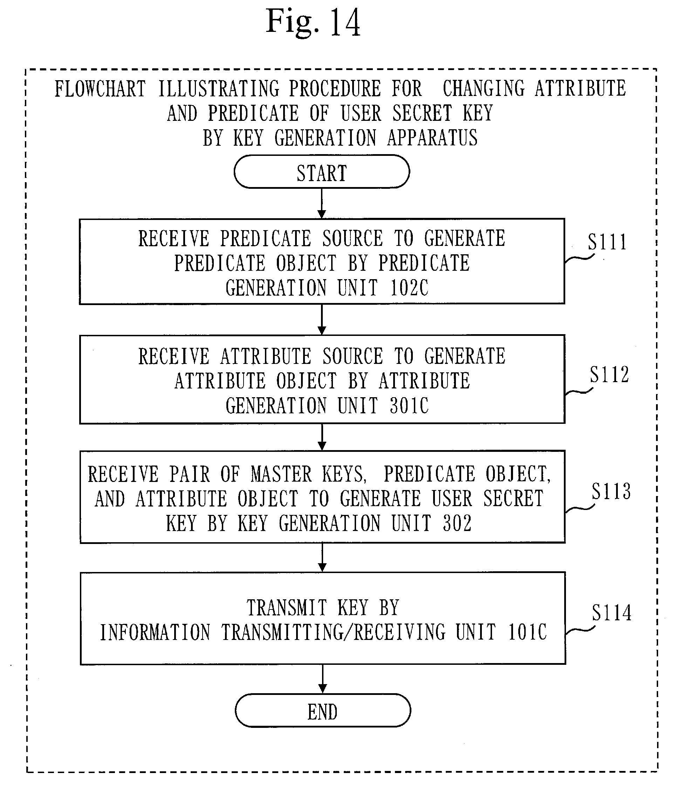

Now, with reference to Fig. 14, a description will be given about a procedure when at least one of the attribute source and the predicate source is changed.

When the at least one of the attribute source and the predicate source is changed, it is necessary for the key generation apparatus 300 to reissue a user secret key uk.

When the change of the predicate source is reported from the encrypted text receiving apparatus 200 (or a user of the encrypted text receiving apparatus 200) to the key generation apparatus 300, the predicate generation unit 102C of the key generation apparatus 300 generates a new predicate object $x_2'$ from a predicate source 2 changed (S111).

When the change of the attribute source is reported from the encrypted text receiving apparatus 200 (or the user of the encrypted text receiving apparatus 200) to the key generation apparatus 300, the attribute generation unit 301C generates a new attribute object $v_1'$ from an attribute source 1 changed (S 112).

Then, the key generation unit 302 generates a new user secret key uk' (S113).

When only the predicate source 2 is changed, the key generation unit 302 generates a new user secret key uk', using the master public key pk, the master secret key sk, the new predicate object $x_2'$, and the attribute object $v_1$.

When only the attribute source 1 is changed, the key generation unit 302 generates a new user secret key uk', using the master public key pk, the master secret key sk, the predicate object $x_2$, and the new attribute object $v_{i'}$.

When the predicate source 2 and the attribute source 1 are changed, the key generation unit 302 generates the new user secret key uk', using the master public key pk, the master secret key sk, the new predicate object $x_2'$, and the new attribute object $v_1'$.

When the user secret key uk before the change of the predicate source or the attribute source is held, the key generation unit 302 deletes the user secret key uk.

The key generation apparatus 300 encrypts the new user secret key uk' to generate a new encrypted user secret key cuk', as indicated in Embodiment 1.

Then, the information transmitting/receiving unit 101C transmits the new user secret key uk' or the new encrypted user secret key uk', according to the same procedure as that in S53 in Fig. 6 (S114).

When the predicate source 1 is changed, the change of the predicate source is reported from the encrypted text receiving apparatus 200 to the encrypted text transmitting apparatus 100. The predicate generation unit 102A generates a new predicate object $x_1'$ from a predicated source 1 after the change.

When the attribute source 2 is changed, the change of the attribute source 2 is reported from the encrypted text receiving apparatus 200 to the encrypted text transmitting apparatus 100. The attribute generation unit 301A generates a new attribute object $v_2'$ from an attribute source 2 after the change.

When only the predicate source 1 is changed, the encryption process unit 103 encrypts the plaintext data m, using the new predicate object $x_1'$ and the master public key pk.

When only the attribute source 2 is changed, the encryption process unit 103 encrypts the plaintext data m, using the new attribute object $v_2'$ and the master public key pk.

When the predicate source 1 and the attribute source 2 are changed, the encryption process unit 103 encrypts the plaintext data m, using the new predicate object $x_1'$, the new attribute object $v_2'$, and the master public key pk.

As described above, in this embodiment, the first algorithm (Unified-Policy of the functional encryption) may be newly introduced into the environment in which the key device supporting the second algorithm (RSA (registered trademark) encryption) is used, without adding alteration to the key device.

Embodiment 4.

In Embodiments 1 to 3, the key management unit 303 of the key generation apparatus 300 writes the key device secret key dsk into the key device 400. This embodiment indicates an example where an element other than the key generation apparatus 300 writes a key device secret key dsk into the key device 400.

In this embodiment, a description will be given about an example where a user secret key uk and encrypted text data ct are generated, based on the Ciphertext-Policy algorithm.

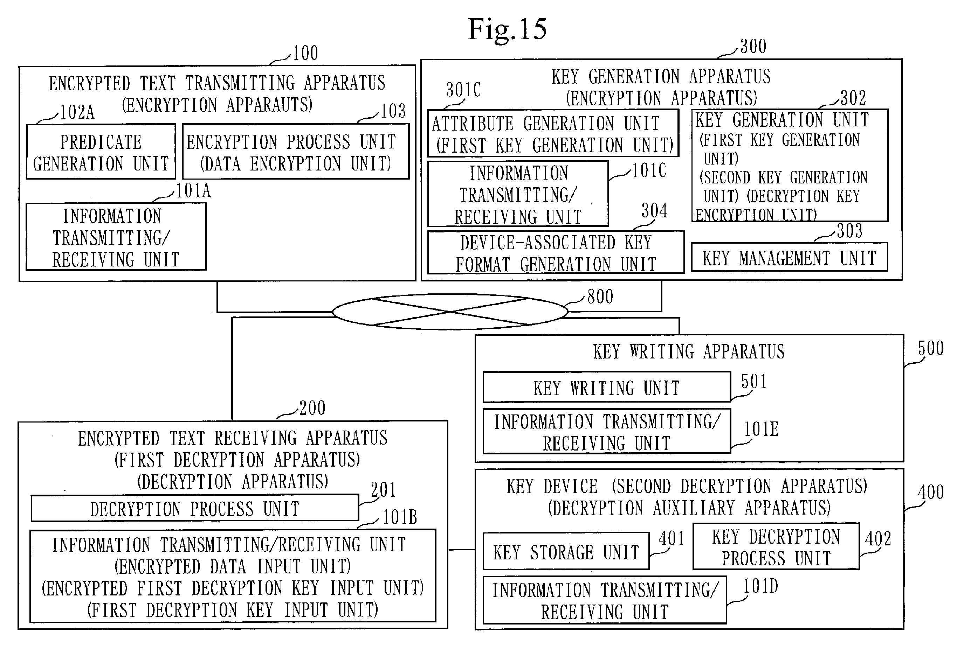

Fig. 15 illustrates a configuration example of a data processing system according to Embodiment 4.

As compared with the configuration in Fig. 1, a key writing apparatus 500 is added in Fig. 15.

Further, a device-associated key format generation unit 304 is added to the key generation apparatus 300.

The device-associated key format generation unit 304 converts the data format of the key device secret key dsk.

To take an example, the device-associated key format generation unit 304 generates a key file including the key device secret key dsk and capable of securely holding the key device secret key dsk in the key device 400.

The key file generated by the device-associated key format generation unit 304 is transmitted to the key writing apparatus 500 by the information transmitting/receiving unit 101C.

The key writing apparatus 500 writes the key file received from the key generation apparatus 300 into the key device 400.

An information transmitting/receiving unit 101E receives the key file transmitted from the key generation apparatus 300.

A key writing unit 501 writes the key file from the key generation apparatus 300 into the key device 400.

Since the other elements are the same as those illustrated in Fig. 1, a description will be omitted.

A difference from Embodiment 1 will be mainly described below.

A matter that is not described below is the same as that in

Embodiment 1.

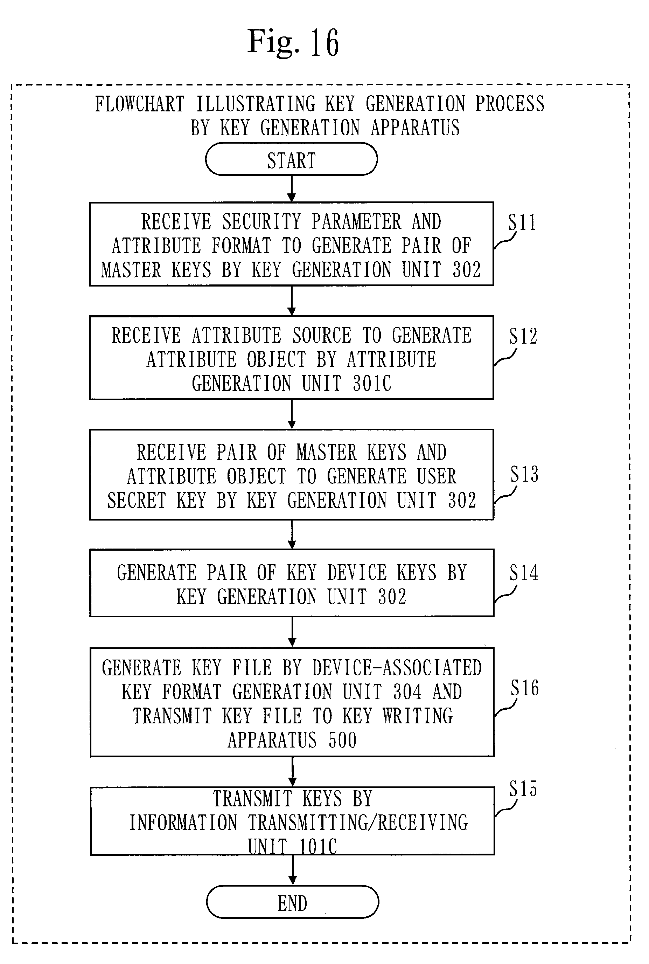

Now, with reference to Fig. 16, details of a key generation process by the key generation apparatus 300 will be described.

Since S11 to S14 are the same as S11 to S14 in Fig. 2, a description will be omitted.

The key device secret key dsk generated in S14 needs to be written into the key device 400.

In this embodiment, the device-associated key format generation unit 304 converts the key device secret key dsk into the key file of a format capable of securely holding the key device secret key dsk in the key device 400 (S16).

The device-associated key format generation unit 304 generates the key file of a PKCS#12 format, for example.

The PKCS#12 key file is a file in which use of the key device secret key dsk is allowed only when the key device 400 receives a correct PIN from the encrypted text receiving apparatus 200.

The key file generated in S16 is transmitted from the information transmitting/receiving unit 101C to the key writing apparatus 500.

The key writing unit 501 of the key writing apparatus 500 stores the key file in the key storage unit 401 of the key device 400.

The process in S 15 is executed after the process in S16. Since S15 is the same as S15 in Fig. 2, a description will be omitted.

An encryption process by the encrypted text transmitting apparatus 100 is the same as that in Embodiment 1 (Fig. 3), and a decryption process by the encrypted text receiving apparatus 200 is the same as that in Embodiment 1 (Fig. 4). Thus, a description will be omitted.

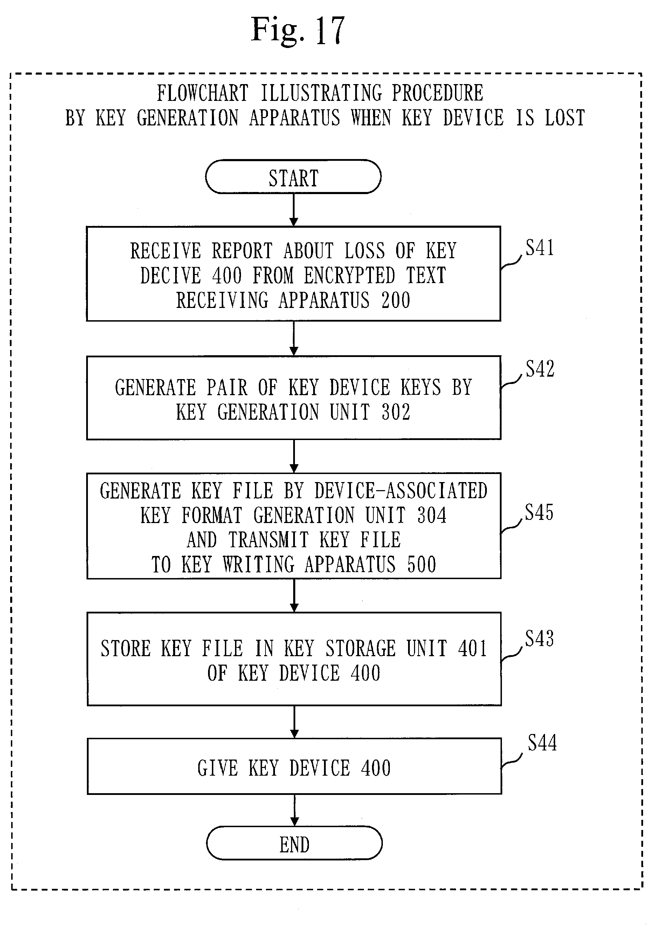

Now, with reference to Fig. 17, a description will be given about a procedure when the key device 400 is lost.

Since S41 and 42 are the same as S41 and 42 in Fig. 5, a description will be omitted.

A new key device secret key dsk' generated in S42 needs to be written into the key device 400.

In this embodiment, the device-associated key format generation unit 304 converts the key device secret key dsk' into a key file of a format capable of securely holding the key device secret key dsk' in the key device 400 (S45).

The device-associated key format generation unit 304 generates the key file of the PKCS#12 format, for example.

The key file generated in S45 is transmitted from the information transmitting/receiving unit 101C to the key writing apparatus 500.

The key writing unit 501 of the key writing apparatus 500 stores the key file in the key storage unit 401 of the key device 400 (S43).

Then, the key device 400 with the key file stored therein is given to a user of the encrypted text receiving apparatus 200 (S44).

Since a procedure when the attribute source of the encrypted text receiving apparatus 200 is changed is the same as that illustrated in Embodiment 1 (Fig. 6), a description will be omitted.

As described above, according to this embodiment, the key device secret key dsk is converted into the key file capable of securely holding the key device secret key dsk in the key device 400. Thus, security may be enhanced.

Embodiment 5.

In this embodiment, a description will be given about an example where an element other than the encrypted text transmitting apparatus 100 and the key generation apparatus 300 generates a predicate object x and an attribute object v.

In this embodiment, a description will be given about an example where a user secret key uk and encrypted text data ct are generated, based on the Ciphertext-Policy algorithm.

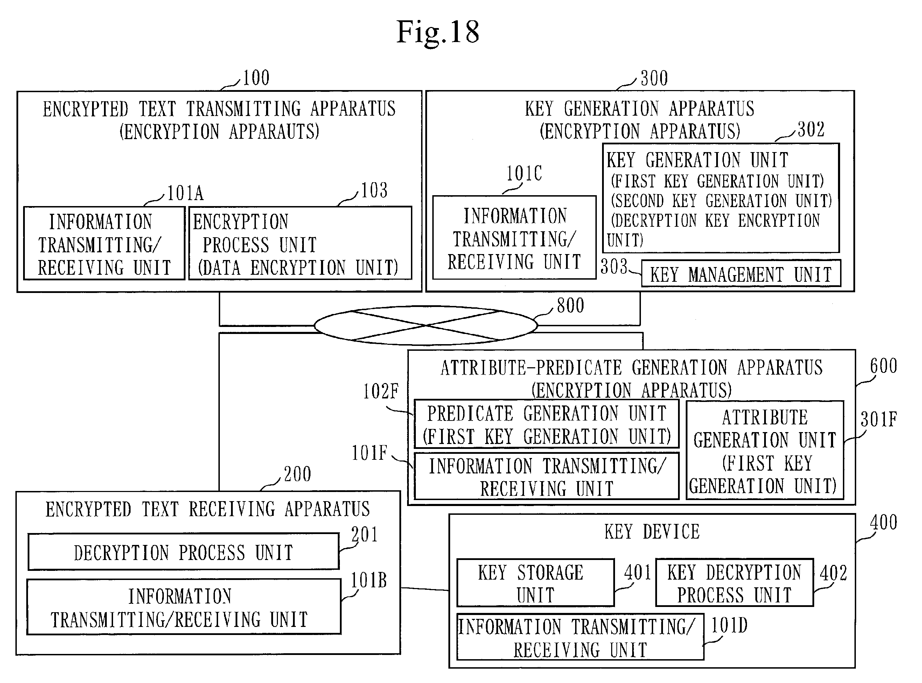

Fig. 18 illustrates a configuration example of a data processing system according to this embodiment.

As compared with the configuration in Fig. 1, an attribute-predicate generation apparatus 600 is added in Fig. 18.

Further, the predicate generation unit 102A is omitted from the encrypted text transmitting apparatus 100, and the attribute generation unit 301C is omitted from the key generation apparatus 300.

The attribute-predicate generation apparatus 600 is constituted from a predicate generation unit 102F, an attribute generation unit 301F, and an information transmitting/receiving unit 101F.

Like the predicate generation unit 102A described in Embodiment 1, the predicate generation unit 102F generates the predicate object x from a predicate source.

Like the attribute generation unit 301C described in Embodiment 1, the attribute generation unit 301F generates the attribute object v from an attribute source.

Then, the information transmitting/receiving unit 101F transmits the predicate object x generated by the predicate generation unit 102F to the encrypted text transmitting apparatus 100, and transmits the attribute object v generated by the attribute generation unit 301F to the key generation apparatus 300.

In this embodiment, the attribute-predicate generation apparatus 600 constitutes a portion of the encryption apparatus, and the predicate generation unit 102F and the attribute generation unit 301F constitute a portion of the first key generation unit.

Since the other elements are the same as those in Fig. 1, a description will be omitted.

A difference from Embodiment 1 will be mainly described below.

A matter that is not described below is the same as that in Embodiment 1.

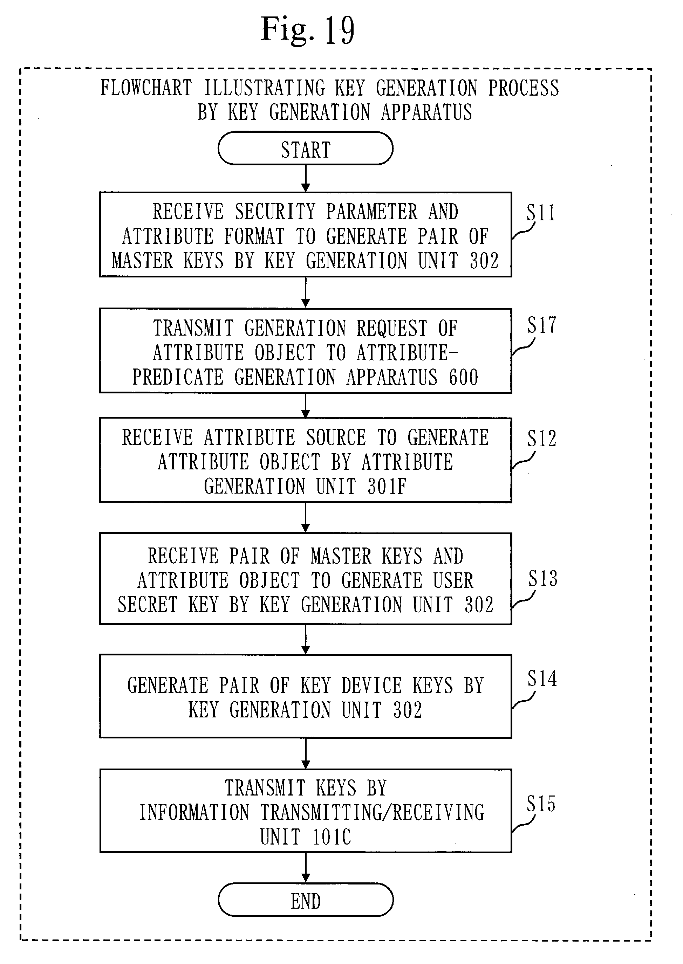

Now, with reference to Fig. 19, details of a key generation process by the key generation apparatus 300 will be described.

The key generation unit 302 generates a pair of master keys (a master public key pk and a master secret key sk), according to the same procedure as that in S11 in Fig. 2 (S11).

Subsequently, the key generation unit 302 transmits a generation request for requesting generation of the attribute object v to the attribute-predicate generation apparatus 600 through the information transmitting/receiving unit 101C (S 17).

The information transmitting/receiving unit 101F of the attribute-predicate generation apparatus 600 receives the generation request of the attribute object v. The attribute generation unit 301F receives the predicate source to generate the attribute object v (S12).

Then, the information transmitting/receiving unit 101F transmits the attribute object v generated by the attribute generation unit 301F to the key generation apparatus 300.

The information transmitting/receiving unit 101C of the key generation apparatus 300 receives the attribute object v transmitted from the attribute-predicate generation apparatus 600.

The key generation unit 302 of the key generation apparatus 300 generates the user secret key uk, using the master public key pk, the master secret key sk, and the attribute object v transmitted from the attribute-predicate generation apparatus 600 (S13).

A procedure for generating the user secret key uk is as described in Embodiment 1.

Since S14 and S15 after S13 are the same as S14 and S15 in Fig. 2, a description will be omitted.

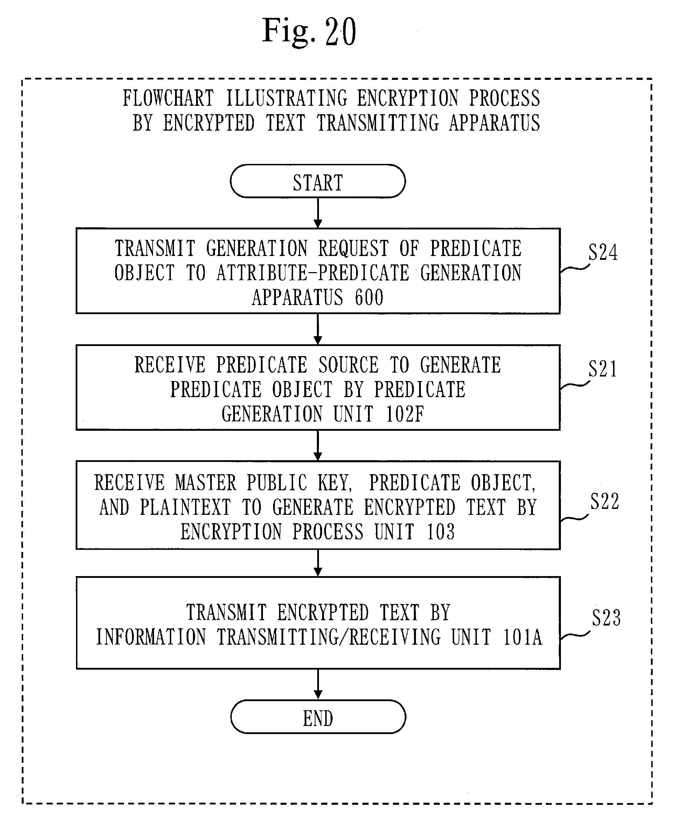

Now, with reference to Fig. 20, details of an encryption process by the encrypted text transmitting apparatus 100 will be described,.

First, the encryption process unit 103 transmits a generation request for requesting generation of the predicate object x to the attribute-predicate generation apparatus 600 through the information transmitting/receiving unit 101 A (S24).

The information transmitting/receiving unit 101F of the attribute-predicate generation apparatus 600 receives the generation request of the predicate object x, and the predicate generation unit 102F receives the predicate source to generate the predicate object x (S21).

Then, the information transmitting/receiving unit 101F transmits the predicate object x generated by the predicate generation unit 102F to the encrypted text transmitting apparatus 100.

The information transmitting/receiving unit 101A of the encrypted text transmitting apparatus 100 receives the predicate object x transmitted from the attribute-predicate generation apparatus 600.

Subsequently, the encryption process unit 103 executes the operation Enc1 on plaintext data m, using the predicate object x transmitted from the attribute-predicate generation apparatus 600 and the master public key pk to generate the encrypted text data ct (S22).

A procedure for generating the encrypted text data ct is as indicated in Embodiment 1.

Since subsequent S23 is the same as S23 in Fig. 3, a description will be omitted.

A decryption process by the encrypted text receiving unit 200 is the same as that illustrated in Embodiment 1 (Fig. 4). A procedure when the key device 400 is lost is also the same as that illustrated in Embodiment 1 (Fig. 5). Thus, a description will be omitted.

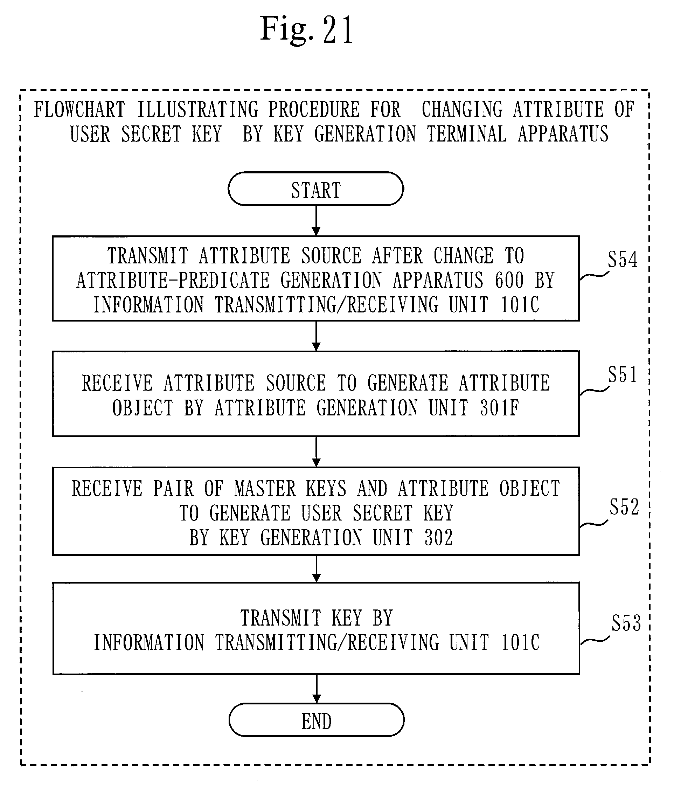

Now, with reference to Fig. 21, a description will be given about a procedure when the attribute source of the encrypted text receiving apparatus 200 is changed.

When the attribute source of the encrypted text receiving apparatus 200 is changed, the information transmitting/receiving unit 101B of the encrypted text receiving apparatus 200 transmits to the attribute-predicate generation apparatus 600 an attribute source after the change (S54).

The information transmitting/receiving unit 101F of the attribute-predicate generation apparatus 600 receives the attribute source after the change, and the attribute generation unit 301F generates a new attribute object v' from the attribute source after the change (S51).

Then, the information transmitting/receiving unit 101F transmits the new attribute object v' to the key generation apparatus 300.

The information transmitting/receiving unit 101C of the key generation apparatus 300 receives the new attribute object v'.

The key generation unit 302 of the key generation apparatus 300 generates a new user secret key uk', using the master public key pk, the master secret key sk, and the new attribute object v' transmitted from the attribute-predicate generation apparatus 600 (S52).

As indicated in Embodiment 1, the key generation apparatus 300 encrypts the new user secret key uk' to generate a new encrypted user secret key cuk'.

Then, the information transmitting/receiving unit 101C transmits the new encrypted user secret key cuk', according to the same procedure as that in S53 in Fig. 6 (S53).

When the predicate source is changed, a predicate source after the change is transmitted from the encrypted text receiving apparatus 200 to the attribute-predicate generation apparatus 600, and the predicate generation unit 102F generates a new predicate object x' from the predicate source after the change.

Then, the information transmitting/receiving unit 101 F transmits the new predicate object x' to the encrypted text transmitting apparatus 100.

The encrypted text transmitting apparatus 100 encrypts the plaintext data m, using the new predicate object x' and the master public key pk.

As described above, in this embodiment, the element other than the encrypted text transmitting apparatus 100 and the key generation apparatus 300 generates the predicate object x and the attribute object v. Thus, apparatus configurations of the encrypted text transmitting apparatus 100 and the key generation apparatus 300 may be simplified.


Embodiment 6.

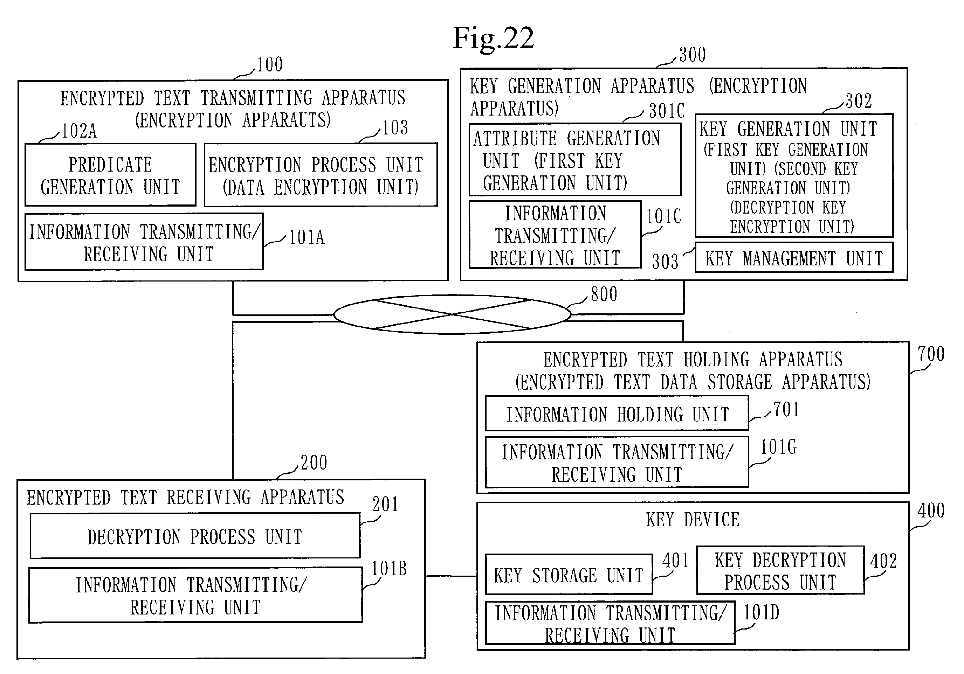

Fig. 22 illustrates a configuration example of a data processing system according to this embodiment.

As compared with the configuration in Fig. 1, an encrypted text holding apparatus 700 is added in Fig. 22.

The encrypted text holding apparatus 700 stores encrypted text data ct.

The encrypted text holding apparatus 700 corresponds to an example of an encrypted text data storage apparatus.

An information transmitting/receiving unit 101 G of the encrypted text holding apparatus 700 receives the encrypted text data ct from the encrypted text transmitting apparatus 100, and transmits the encrypted text data ct to the encrypted text receiving apparatus 200.

The information holding unit 701 stores the encrypted text data ct from the encrypted text transmitting apparatus 100.

Since the other elements are the same as those illustrated in Fig. 1, a description will be omitted.

A difference from Embodiment 1 will be mainly described below.

A matter that is not described below is the same as that in Embodiment 1.

A key generation process by the key generation apparatus 300 is the same as that in Embodiment 1 (Fig. 2). Thus, a description of the key generation process will be mitted.

An encryption process by the encrypted text transmitting apparatus 100 is also the same as that in Embodiment 1 (Fig. 3). Only a transmission destination of the encrypted text data ct is different.

In Embodiment 1, the encrypted text transmitting apparatus 100 transmits the encrypted text data ct to the encrypted text receiving apparatus 200. In this embodiment, the encrypted text transmitting apparatus 100 transmits the encrypted text data ct to the encrypted text holding apparatus 700.

In the encrypted text holding apparatus 700, the information transmitting/receiving unit 101G receives the encrypted text data ct, and the information holding unit 701 stores the encrypted text data ct.

The information holding unit 701 may also store information other than the encrypted text data ct.

Since the encrypted text data ct is held in the encrypted text holding apparatus 700, the information transmitting/receiving unit 101B of the encrypted text receiving apparatus 200 transmits an encrypted text transmission request requesting transmission of the encrypted text data ct to the encrypted text holding apparatus 700, in order to obtain the encrypted text data ct.

The information transmitting/receiving unit 101G of the encrypted text holding apparatus 700 receives the encrypted text transmission request, and transmits to the encrypted text receiving apparatus 200 the encrypted text data ct stored in the information holding unit 701.

The information transmitting/receiving unit 101B of the encrypted text receiving apparatus 200 receives the encrypted text data ct, and the decryption process unit 201 performs a decryption process of the encrypted text data ct, according to the procedure (Fig. 4) indicated in Embodiment 1.

Since a procedure when the key device 400 is lost and a procedure when the attribute source of the encrypted text receiving apparatus 200 is changed are the same as those illustrated in Embodiment 1 (Figs. 5 and 6), a description will be omitted.

As described above, also when the element other than the encrypted text receiving apparatus 200 holds the encrypted text data ct, a new operation algorithm for encryption and decryption may be introduced without adding alteration to the key device.

In each of Embodiments 1 to 6, the description has been given, using the algorithm for the functional encryption as an example of the first algorithm. Any operation algorithm, however, may be employed as the first algorithm if the operation algorithm is an algorithm not implemented in the key device.

The ID-based encryption algorithm, for example, may be employed as the first algorithm.

In each of Embodiments 1 to 6, the description has been given, using the RSA (registered trademark) encryption algorithm as an example of the second algorithm. Any operation algorithm, however, may be employed as the second algorithm if the operation algorithm is an algorithm capable of being implemented in the key device.

The above description has been given about the embodiments of the present invention. Two or more of these embodiments may be combined to be implemented.

Alternatively, one of these embodiments may be partially implemented.

Alternatively, two or more of these embodiments may be partially combined to be implemented.

The present invention is not limited to these embodiments, and various modifications are possible, as necessary.

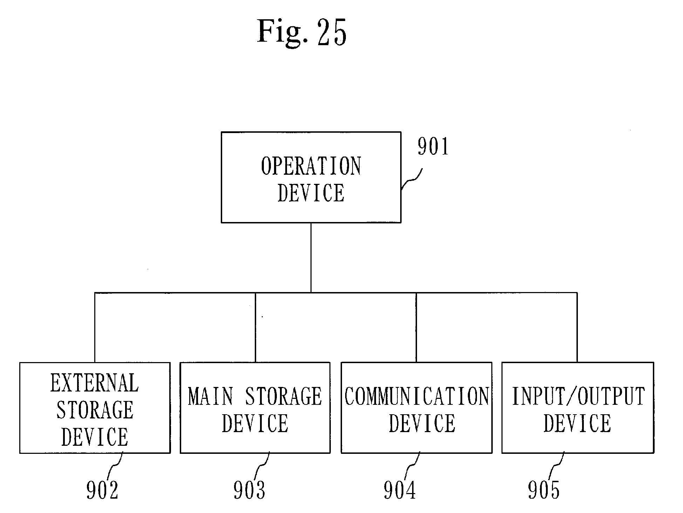

Finally, a hardware configuration example of each of the encrypted text transmitting apparatus 100, the encrypted text receiving apparatus 200, the key generation apparatus 300, the key writing apparatus 500, the attribute-predicate generation apparatus 600, and the encrypted text holding apparatus 700 (hereinafter referred to as the encrypted text transmitting apparatus 100 and so on) illustrated in Embodiments 1 to 6 will be described, with reference to Fig. 25.

The encrypted text transmitting apparatus 100 and so on are each a computer, and each element of the encrypted text transmitting apparatus 100 and so on may be implemented by a program.

As the hardware configuration of each of the encrypted text transmitting apparatus 100 and so on, an operation device 901, an external storage device 902, a main storage device 903, a communication device 904, and an input/output device 905 are connected to a bus.

Though not illustrated in Fig. 25, an interface with the key device 400 is connected to the bus in the encrypted text receiving apparatus 200.

The operation device 901 is a CPU (Central Process unit) that executes programs.

The external storage device 902 is a ROM (Read Only Memory), a flash memory, or a hard disk drive, for example.

The main storage device 903 is a RAM (Random Access Memory).

The communication device 904 corresponds to the physical layer of each information transmitting/receiving unit 101, and is a NIC (Network Interface Card), for example.

The input/output device 905 is a mouse, a keyboard, or a display device, for example.

The programs are usually stored in the external storage device 902, and are sequentially read into and executed by the operation device 901, after having been loaded into the main storage device 903.

The programs are the ones that implement functions described as "-units" illustrated in Fig. 1 and so on.

Further, an operating system (OS) is also stored in the external storage device 902, and at least a part of the OS is loaded into the main storage device 903. The operation device 901 executes the program that implements the function of each "~unit" illustrated in Fig. 1 and so on, while executing the OS.

In the explanation of the Embodiments 1 to 6, information, data, signal values, and variable values indicating results of processings described as "determination of~", "judgment of~", "encryption of~", "decryption of ~", "generation of ~", "conversion of ~", "setting of ~", "registration of ~", "selection of~", "input of~", "receipt of~", etc. are stored in the main storage device 903, as files.

The configuration in Fig. 25 illustrates just an example of the hardware configuration of each of the encrypted text transmitting apparatus 100 and so on. The hardware configuration of each of the encrypted text transmitting apparatus 100 and so on is not limited to the configuration described in Fig. 25, and a different configuration may be employed.

A hardware configuration of each of the encrypted text transmitting apparatus 100, the encrypted text receiving apparatus 200, the key generation apparatus 300, the key writing apparatus 500, and the encrypted text holding apparatus 700 may be different.

**REFERENCE SIGNS LIST**

100: encrypted text transmitting apparatus, 101: information transmitting/receiving unit, 102: predicate generation unit, 103: encryption process unit, 200: encrypted text receiving apparatus, 201: decryption process unit, 300: key generation apparatus, 301: attribute generation unit, 302: key generation unit, 303: key management unit, 304: device-associated key format generation unit, 400: key device, 401: key storage unit, 402: key decryption process unit, 500:

key writing apparatus, 501: key writing unit, 600: attribute-predicate generation apparatus, 700: encrypted text holding apparatus, 701: information holding unit, 800: Internet

**Claims**

1. A data processing system comprising:

    a first decryption apparatus to perform a decryption process according to a first decryption algorithm;
    a second decryption apparatus to perform a decryption process according to a second decryption algorithm different from the first decryption algorithm; and
    an encryption apparatus to generate an encryption key and a decryption key for the first decryption algorithm as a first encryption key and a first decryption key, to generate an encryption key and a decryption key for the second decryption algorithm as a second encryption key and a second decryption key, to encrypt the first decryption key using the second encryption key according to an encryption algorithm associated with the second decryption algorithm to generate an encrypted first decryption key, and to encrypt plaintext data using the first encryption key according to an encryption algorithm associated with the first decryption algorithm to generate encrypted text data;
    wherein the second decryption apparatus performs the decryption process of the encrypted first decryption key using the second decryption key according to the second decryption algorithm; and
    wherein the first decryption apparatus performs the decryption process of the encrypted text data using the first decryption key decrypted by the second decryption apparatus according to the first decryption algorithm.

2. The data processing system according to claim 1,
    wherein the first decryption apparatus receives the encrypted first decryption key and the encrypted text data, outputs the encrypted first decryption key received to the second decryption apparatus, and
    receives from the second decryption apparatus the first decryption key decrypted by the second decryption apparatus and performs the decryption process of the encrypted text data, using the first decryption key received.

3. The data processing system according to claim 1,
    wherein the encryption apparatus stores at least the second decryption key and the encrypted first decryption key, generates a new second encryption key and a new second decryption key, at an update timing of the second encryption key and the second decryption key,
    performs a decryption process of the encrypted first decryption key according to the second decryption algorithm using the second decryption key stored to decrypt the first decryption key,
    encrypts the first decryption key decrypted, using the new second encryption key according to the encryption algorithm associated with the second decryption algorithm to generate a new encrypted first decryption key, and
    stores the new second decryption key and the new encrypted first decryption key; and
    wherein the second decryption apparatus performs the decryption process of the new encrypted first decryption key using the new second decryption key according to the second decryption algorithm.

4. The data processing system according to claim 1,
    wherein the encryption apparatus stores at least the second encryption key,
    generates a new first encryption key and a new first decryption key, at an update timing of the first encryption key and the first decryption key,
    encrypts the new first decryption key using the second encryption key according to the encryption algorithm associated with the second decryption algorithm to generate a new encrypted first decryption key, and
    encrypts the plaintext data using the new first encryption key according to the encryption algorithm associated with the first decryption algorithm to generate encrypted text data;
    wherein the second decryption apparatus performs the decryption process of the new encrypted first decryption key using the second decryption key according to the second decryption algorithm; and
    wherein the first decryption apparatus performs the decryption process of the encrypted text data according to the first decryption algorithm using the new first decryption key decrypted by the second decryption apparatus.

5. The data processing system according to claim 1,
    wherein the first decryption apparatus performs the decryption process according to a Ciphertext-Policy algorithm of functional encryption, as the first decryption algorithm; and
    wherein the encryption apparatus generates an encryption key and a decryption key for the Ciphertext-Policy algorithm as the first encryption key and the first decryption key.

**6.** The data processing system according to claim 1,
wherein the first decryption apparatus performs the decryption process according to a Key-Policy algorithm of functional encryption, as the first decryption algorithm; and
wherein the encryption apparatus generates an encryption key and a decryption key for the Key-Policy algorithm as the first encryption key and the first decryption key.

**7.** The data processing system according to claim 1,
wherein the first decryption apparatus performs the decryption process according to a Unified-Policy algorithm of functional encryption, as the first decryption algorithm; and
wherein the encryption apparatus generates an encryption key and a decryption key for the Unified-Policy algorithm as the first encryption key and the first decryption key.

**8.** The data processing system according to claim 1,
wherein the encryption apparatus converts a data format of the second decryption key.

**9.** The data processing system according to claim 1,
wherein the data processing system further comprises:

an encrypted text data storage apparatus to receive the encrypted text data and store the encrypted text data received; and
wherein the first decryption apparatus receives the encrypted text data from the encrypted text data storage apparatus, and performs the decryption process of the encrypted text data received.

**10.** The data processing system according to claim 1,
wherein the second decryption apparatus is a storage medium to be connected to the first decryption apparatus.

**11.** An encryption apparatus comprising:

a first key generation unit to generate an encryption key and a decryption key for a first encryption algorithm as a first encryption key and a first decryption key;
a second key generation unit to generate an encryption key for a second encryption algorithm different from the first encryption algorithm, as a second encryption key;
a decryption key encryption unit to encrypt the first decryption key using the second encryption key according to the second encryption algorithm to generate an encrypted first decryption key; and
a data encryption unit to encrypt plaintext data using the first encryption key according to the first encryption algorithm to generate encrypted text data.

**12.** The encryption apparatus according to claim 11,
wherein the data encryption unit generates the encrypted text data for a first decryption apparatus, the first decryption apparatus being to perform a decryption process of the encrypted text data using the first decryption key according to a decryption algorithm associated with the first encryption algorithm, the first decryption key having been decrypted by a second decryption apparatus which performs a decryption process of the encrypted first decryption key according to a decryption algorithm associated with the second encryption algorithm; and
wherein the second key generation unit generates for the second decryption apparatus a second decryption key associated with the first encryption key and used for the decryption process of the encrypted first decryption key.

**13.** A decryption apparatus to perform a decryption process according to a first decryption algorithm and connected to a decryption auxiliary apparatus, the decryption auxiliary apparatus being to perform a decryption process according to a second decryption algorithm different from the first decryption algorithm, the decryption apparatus comprising:

an encrypted text data input unit to receive encrypted text data obtained by encrypting plaintext data using a first encryption key being an encryption key for the first decryption algorithm;
an encrypted first decryption key input unit to receive an encrypted first decryption key obtained by encrypting a first decryption key using a second encryption key, the first decryption key being a decryption key for the first decryption algorithm, the second encryption key being an encryption key for the second decryption algorithm;
an encrypted first decryption key output unit to output the encrypted first decryption key to the decryption auxiliary apparatus;

a first decryption key input unit to receive from the decryption auxiliary apparatus the first decryption key obtained by performing the decryption process of the encrypted first decryption key using a second decryption key according to the second decryption algorithm by the decryption auxiliary apparatus, the second decryption key being a decryption key for the second decryption algorithm; and

a decryption process unit to perform the decryption process of the encrypted text data using the first decryption key according to the first decryption algorithm.

**14.** A program to cause a computer to execute:

a first key generation step of generating an encryption key and a decryption key for a first encryption algorithm as a first encryption key and a first decryption key;

a second key generation step of generating an encryption key for a second encryption algorithm different from the first encryption algorithm, as a second encryption key;

a decryption key encryption step of encrypting the first decryption key using the second encryption key according to the second encryption algorithm to generate an encrypted first decryption key; and

a data encryption step of encrypting plaintext data using the first encryption key according to the first encryption algorithm to generate encrypted text data.

**15.** A program for a computer connected to a decryption auxiliary apparatus, the computer being to perform a decryption process according to a first decryption algorithm, the decryption auxiliary apparatus being to perform a decryption process according to a second decryption algorithm different from the first decryption algorithm, the program causing the computer to execute:

an encrypted text data input step of receiving encrypted text data obtained by encrypting plaintext data using a first encryption key being an encryption key for the first decryption algorithm;

an encrypted first decryption key input step of receiving an encrypted first decryption key obtained by encrypting a first decryption key using a second encryption key, the first decryption key being a decryption key for the first decryption algorithm, the second encryption key being an encryption key for the second decryption algorithm;

an encrypted first decryption key output step of outputting the encrypted first decryption key to the decryption auxiliary apparatus;

a first decryption key input step of receiving, from the decryption auxiliary apparatus, the first decryption key obtained by performing the decryption process of the encrypted first decryption key using a second decryption key according to the second decryption algorithm by the decryption auxiliary apparatus, the second decryption key being a decryption key for the second decryption algorithm; and

a decryption process step of performing the decryption process of the encrypted text data using the first decryption key according to the first decryption algorithm.

# Fig.1

ENCRYPTED TEXT TRANSMITTING APPARATUS (ENCRYPTION APPARAUTS) — 100
- PREDICATE GENERATION UNIT — 102A
- ENCRYPTION PROCESS UNIT (DATA ENCRYPTION UNIT) — 103
- INFORMATION TRANSMITTING/ RECEIVING UNIT — 101A

KEY GENERATION APPARATUS (ENCRYPTION APPARATUS) — 300
- ATTRIBUTE GENERATION UNIT (FIRST KEY GENERATION UNIT) — 301C
- KEY GENERATION UNIT (FIRST KEY GENERATION UNIT) (SECOND KEY GENERATION UNIT) (DECRYPTION KEY ENCRYPTION UNIT) — 302
- INFORMATION TRANSMITTING/ RECEIVING UNIT — 101C
- KEY MANAGEMENT UNIT — 303

800

ENCRYPTED TEXT RECEIVING APPARATUS (FIRST DECRYPTION APPARATUS) (DECRYPTION APPARATUS) — 200
- DECRYPTION PROCESS UNIT — 201
- INFORMATION TRANSMITTING/ RECEIVING UNIT (ENCRYPTED DATA INPUT UNIT) (ENCRYPTED FIRST DECRYPTION KEY INPUT UNIT) (FIRST DECRYPTION KEY INPUT UNIT) — 101B

KEY DEVICE (SECOND DECRYPTION APPARATUS) (DECRYPTION AUXILIARY APPARATUS) — 400
- KEY STORAGE UNIT — 401
- KEY DECRYPTION PROCESS UNIT — 402
- INFORMATION TRANSMITTING/ RECEIVING UNIT — 101D

EP 3 079 299 A1

# Fig. 2

FLOWCHART ILLUSTRATING KEY GENERATION PROCESS
BY KEY GENERATION APPARATUS

START

RECEIVE SECURITY PARAMETER AND ATTRIBUTE
FORMAT TO GENERATE PAIR OF MASTER KEYS
BY KEY GENERATION UNIT 302 — S11

RECEIVE ATTRIBUTE SOURCE TO GENERATE
ATTRIBUTE OBJECT BY ATTRIBUTE GENERATION
UNIT 301C — S12

RECEIVE PAIR OF MASTER KEYS AND ATTRIBUTE
OBJECT TO GENERATE USER SECRET KEY
BY KEY GENERATION UNIT 302 — S13

GENERATE PAIR OF KEY DEVICE KEYS
BY KEY GENERATION UNIT 302 — S14

TRANSMIT KEYS BY
INFORMATION TRANSMITTING/RECEIVING UNIT 101C — S15

END

# Fig. 3

FLOWCHART ILLUSTRATING ENCRYPTION PROCESS
BY ENCRYPTED TEXT TRANSMITTING APPARATUS

START

RECEIVE PREDICATE SOURCE TO GENERATE
PREDICATE OBJECT BY PREDICATE GENERATION UNIT
102A — S21

RECEIVE MASTER PUBLIC KEY, PREDICATE OBJECT,
AND PLAINTEXT TO GENERATE ENCRYPTED TEXT BY
ENCRYPTION PROCESS UNIT 103 — S22

TRANSMIT ENCRYPTED TEXT BY INFORMATION
TRANSMITTING/RECEIVING UNIT 101A — S23

END

# Fig.4

FLOWCHART ILLUSTRATING DECRYPTION PROCESS
BY ENCRYPTED TEXT RECEIVING APPARATUS

START

RECEIVE MASTER PUBLIC KEY, USER SECRET KEY,
AND ENCRYPTED TEXT TO GENERATE PLAINTEXT BY
DECRYPTION PROCESS UNIT 201 — S31

END

# Fig. 5

FLOWCHART ILLUSTRATING PROCEDURE
BY KEY GENERATION APPARATUS WHEN KEY DEVICE IS LOST

START

RECEIVE REPORT ABOUT LOSS OF KEY DEVICE 400
FROM ENCRYPTED TEXT RECEIVING APPARATUS 200 — S41

GENERATE PAIR OF KEY DEVICE KEYS BY KEY
GENERATION UNIT 302 — S42

STORE KEY DEVICE SECRET KEY IN KEY STORAGE
UNIT 401 OF KEY DEVICE 400 — S43

GIVE KEY DEVICE 400 — S44

END

# Fig. 6

FLOWCHART ILLUSTRATING PROCEDURE FOR CHANGING ATTRIBUTE OF
USER SECRET KEY BY KEY GENERATION APPARATUS

START

RECEIVE ATTRIBUTE SOURCE TO GENERATE
ATTRIBUTE OBJECT BY ATTRIBUTE GENERATION
UNIT 301C — S51

RECEIVE PAIR OF MASTER KEYS AND ATTRIBUTE
OBJECT TO GENERATE USER SECRET KEY BY KEY
GENERATION UNIT 302 — S52

GIVE KEY BY
INFORMATION TRANSMITTING/RECEIVING UNIT 101C — S53

END

# Fig.7

ENCRYPTED TEXT TRANSMITTING APPARATUS ~100 (ENCRYPTION APPARAUTS)

301A
ATTRIBUTE GENERATION UNIT

103
ENCRYPTION PROCESS UNIT (DATA ENCRYPTION UNIT)

101A
INFORMATION TRANSMITTING/ RECEIVING UNIT

KEY GENERATION APPARATUS ~300 (ENCRYPTION APPARATUS)

102C
PREDICATE GENERATION UNIT (FIRST KEY GENERATION UNIT)

302
KEY GENERATION UNIT (FIRST KEY GENERATION UNIT) (SECOND KEY GENERATION UNIT) (DECRYPTION KEY ENCRYPTION UNIT)

101C
INFORMATION TRANSMITTING/ RECEIVING UNIT

303
KEY MANAGEMENT UNIT

800

ENCRYPTED TEXT RECEIVING APPARATUS (FIRST DECRYPTION APPARATUS) (DECRYPTION APPARATUS) ~200

201
DECRYPTION PROCESS UNIT

101B
INFORMATION TRANSMITTING/RECEIVING UNIT (ENCRYPTED DATA INPUT UNIT) (ENCRYPTED FIRST DECRYPTION KEY INPUT UNIT) (FIRST DECRYPTION KEY INPUT UNIT)

KEY DEVICE (SECOND DECRYPTION APPARATUS) ~400 (DECRYPTION AUXILIARY APPARATUS)

401
KEY STORAGE UNIT

402
KEY DECRYPTION PROCESS UNIT

101D
INFORMATION TRANSMITTING/ RECEIVING UNIT

EP 3 079 299 A1

# Fig. 8

FLOWCHART ILLUSTRATING KEY GENERATION PROCESS
BY KEY GENERATION APPARATUS

START

RECEIVE SECURITY PARAMETER AND ATTRIBUTE
FORMAT TO GENERATE PAIR OF MASTER KEYS
BY KEY GENERATION UNIT 302 — S61

RECEIVE PREDICATE SOURCE TO GENERATE
PREDICATE OBJECT BY PREDICATE GENERATION
UNIT 102C — S62

RECEIVE PAIR OF MASTER KEYS AND PREDICATE
OBJECT TO GENERATE USER SECRET KEY
BY KEY GENERATION UNIT 302 — S63

GENERATE PAIR OF KEY DEVICE KEYS
BY KEY GENERATION UNIT 302 — S64

TRANSMIT KEYS
BY INFORMATION TRANSMITTING/RECEIVING UNIT
101C — S65

END

# Fig. 9

FLOWCHART ILLUSTRATING ENCRYPTION PROCESS
BY ENCRYPTED TEXT TRANSMITTING APPARATUS

START

RECEIVE ATTRIBUTE SOURCE TO GENERATE
ATTRIBUTE OBJECT BY ATTRIBUTE
GENERATION UNIT 301A    S71

RECEIVE MASTER PUBLIC KEY, ATTRIBUTE OBJECT,
AND PLAINTEXT TO GENERATE ENCRYPTED TEXT BY
ENCRYPTION PROCESS UNIT 103    S72

TRANSMIT ENCRYPTED TEXT BY
INFORMATION TRANSMITTING/RECEIVING UNIT 101A    S73

END

# Fig. 10

FLOWCHART ILLUSTRATING PROCEDURE FOR  CHANGING PREDICATE OF
USER SECRET KEY  BY KEY GENERATION APPARATUS

( START )

RECEIVE PREDICATE SOURCE TO GENERATE
PREDICATE OBJECT BY PREDICATE
GENERATION UNIT 102C                                    S81

RECEIVE PAIR OF MASTER KEYS AND PREDICATE
OBJECT TO GENERATE USER SECRET KEY
BY KEY GENERATION UNIT 302                              S82

TRANSMIT KEY BY
INFORMATION TRANSMITTING/RECEIVING UNIT 101C            S83

( END )

# Fig.11

**100 — ENCRYPTED TEXT TRANSMITTING APPARATUS (ENCRYPTION APPARAUTS)**

- 102A PREDICATE GENERATION UNIT
- 103 ENCRYPTION PROCESS UNIT (DATA ENCRYPTION UNIT)
- 101A INFORMATION TRANSMITTING/RECEIVING UNIT
- 301A ATTRIBUTE GENERATION UNIT (FIRST KEY GENERATION UNIT)

**300 — KEY GENERATION APPARATUS (ENCRYPTION APPARATUS)**

- 301C ATTRIBUTE GENERATION UNIT (FIRST KEY GENERATION UNIT)
- 302 KEY GENERATION UNIT (FIRST KEY GENERATION UNIT) (SECOND KEY GENERATION UNIT) (DECRYPTION KEY ENCRYPTION UNIT)
- 101C INFORMATION TRANSMITTING/RECEIVING UNIT
- 102C PREDICATE GENERATION UNIT (FIRST KEY GENERATION UNIT)
- 303 KEY MANAGEMENT UNIT

800

**200 — ENCRYPTED TEXT RECEIVING APPARATUS (FIRST DECRYPTION APPARATUS) (DECRYPTION APPARATUS)**

- 201 DECRYPTION PROCESS UNIT
- 101B INFORMATION TRANSMITTING/RECEIVING UNIT (ENCRYPTED DATA INPUT UNIT) (ENCRYPTED FIRST DECRYPTION KEY INPUT UNIT) (FIRST DECRYPTION KEY INPUT UNIT)

**400 — KEY DEVICE (SECOND DECRYPTION APPARATUS) (DECRYPTION AUXILIARY APPARATUS)**

- 401 KEY STORAGE UNIT
- 402 KEY DECRYPTION PROCESS UNIT
- 101D INFORMATION TRANSMITTING/RECEIVING UNIT

EP 3 079 299 A1

# Fig. 12

FLOWCHART ILLUSTRATING KEY GENERATION PROCESS
BY KEY GENERATION APPARATUS

START

RECEIVE SECURITY PARAMETER AND ATTRIBUTE
FORMAT TO GENERATE PAIR OF MASTER KEYS BY KEY
GENERATION UNIT 302 — S91

RECEIVE ATTRIBUTE SOURCE TO GENERATE
ATTRIBUTE OBJECT BY ATTRIBUTE GENERATION UNIT
301C. RECEIVE PREDICATE SOURCE TO GENERATE
PREDICATE OBJECT BY PREDICATE GENERATION UNIT
102C — S92

RECEIVE PAIR OF MASTER KEYS, ATTRIBUTE OBJECT,
AND PREDICATE OBJECT TO GENERATE USER SECRET
KEY BY KEY GENERATION UNIT 302 — S93

GENERATE PAIR OF KEY DEVICE KEYS BY KEY
GENERATION UNIT 302 — S94

TRANSMIT KEYS BY
INFORMATION TRANSMITTING/RECEIVING UNIT 101C — S95

END

# Fig. 13

FLOWCHART ILLUSTRATING ENCRYPTION PROCESS
BY ENCRYPTED TEXT TRANSMITTING APPARATUS

START

RECEIVE ATTRIBUTE SOURCE TO GENERATE ATTRIBUTE OBJECT BY ATTRIBUTE GENERATION UNIT 301A. RECEIVE PREDICATE SOURCE TO GENERATE PREDICATE OBJECT BY PREDICATE GENERATION UNIT 102A — S101

RECEIVE MASTER PUBLIC KEY, PREDICATE OBJECT, ATTRIBUTE OBJECT, AND PLAINTEXT TO GENERATE ENCRYPTED TEXT BY ENCRYPTION PROCESS UNIT 103 — S102

TRANSMIT ENCRYPTED TEXT BY INFORMATION TRANSMITTING/RECEIVING UNIT 101A — S103

END

# Fig. 14

FLOWCHART ILLUSTRATING PROCEDURE FOR CHANGING ATTRIBUTE
AND PREDICATE OF USER SECRET KEY
BY KEY GENERATION APPARATUS

START

RECEIVE PREDICATE SOURCE TO GENERATE
PREDICATE OBJECT BY PREDICATE
GENERATION UNIT 102C  — S111

RECEIVE ATTRIBUTE SOURCE TO GENERATE
ATTRIBUTE OBJECT BY ATTRIBUTE
GENERATION UNIT 301C  — S112

RECEIVE PAIR OF MASTER KEYS, PREDICATE OBJECT,
AND ATTRIBUTE OBJECT TO GENERATE USER SECRET
KEY BY KEY GENERATION UNIT 302  — S113

TRANSMIT KEY BY
INFORMATION TRANSMITTING/RECEIVING UNIT 101C  — S114

END

Fig.15

ENCRYPTED TEXT TRANSMITTING APPARATUS 100 (ENCRYPTION APPARAUTS)

PREDICATE GENERATION UNIT 102A

ENCRYPTION PROCESS UNIT 103 (DATA ENCRYPTION UNIT)

INFORMATION TRANSMITTING/ RECEIVING UNIT 101A

KEY GENERATION APPARATUS 300 (ENCRYPTION APPARATUS)

ATTRIBUTE GENERATION UNIT 301C (FIRST KEY GENERATION UNIT)

KEY GENERATION UNIT 302 (FIRST KEY GENERATION UNIT)
(SECOND KEY GENERATION UNIT) (DECRYPTION KEY ENCRYPTION UNIT) 303

INFORMATION TRANSMITTING/ RECEIVING UNIT 101C

DEVICE-ASSOCIATED KEY FORMAT GENERATION UNIT 304

KEY MANAGEMENT UNIT

800

KEY WRITING APPARATUS 500

KEY WRITING UNIT 501

INFORMATION TRANSMITTING/ RECEIVING UNIT 101E

KEY DEVICE (SECOND DECRYPTION APPARATUS) 400 (DECRYPTION AUXILIARY APPARATUS)

KEY STORAGE UNIT 401

KEY DECRYPTION PROCESS UNIT 402

INFORMATION TRANSMITTING/ RECEIVING UNIT 101D

ENCRYPTED TEXT RECEIVING APPARATUS 200 (FIRST DECRYPTION APPARATUS) (DECRYPTION APPARATUS)

DECRYPTION PROCESS UNIT 201

INFORMATION TRANSMITTING/RECEIVING UNIT 101B (ENCRYPTED DATA INPUT UNIT) (ENCRYPTED FIRST DECRYPTION KEY INPUT UNIT) (FIRST DECRYPTION KEY INPUT UNIT)

# Fig. 16

FLOWCHART ILLUSTRATING KEY GENERATION PROCESS
BY KEY GENERATION APPARATUS

START

RECEIVE SECURITY PARAMETER AND
ATTRIBUTE FORMAT TO GENERATE PAIR OF
MASTER KEYS BY KEY GENERATION UNIT 302    S11

RECEIVE ATTRIBUTE SOURCE TO GENERATE
ATTRIBUTE OBJECT BY ATTRIBUTE
GENERATION UNIT 301C    S12

RECEIVE PAIR OF MASTER KEYS AND
ATTRIBUTE OBJECT TO GENERATE USER
SECRET KEY BY KEY GENERATION UNIT 302    S13

GENERATE PAIR OF KEY DEVICE KEYS BY
KEY GENERATION UNIT 302    S14

GENERATE KEY FILE BY DEVICE-ASSOCIATED
KEY FORMAT GENERATION UNIT 304 AND
TRANSMIT KEY FILE TO KEY WRITING
APPARATUS 500    S16

TRANSMIT KEYS BY
INFORMATION TRANSMITTING/RECEIVING
UNIT 101C    S15

END

# Fig. 17

FLOWCHART ILLUSTRATING PROCEDURE
BY KEY GENERATION APPARATUS WHEN KEY DEVICE IS LOST

START

RECEIVE REPORT ABOUT LOSS OF KEY
DECIVE 400 FROM ENCRYPTED TEXT
RECEIVING APPARATUS 200 — S41

GENERATE PAIR OF KEY DEVICE KEYS BY
KEY GENERATION UNIT 302 — S42

GENERATE KEY FILE BY DEVICE-ASSOCIATED
KEY FORMAT GENERATION UNIT 304
AND TRANSMIT KEY FILE
TO KEY WRITING APPARATUS 500 — S45

STORE KEY FILE IN KEY STORAGE UNIT 401
OF KEY DEVICE 400 — S43

GIVE KEY DEVICE 400 — S44

END

Fig.18

ENCRYPTED TEXT TRANSMITTING APPARATUS 100
(ENCRYPTION APPARAUTS)

101A INFORMATION TRANSMITTING/RECEIVING UNIT

103 ENCRYPTION PROCESS UNIT (DATA ENCRYPTION UNIT)

KEY GENERATION APPARATUS 300
(ENCRYPTION APPARATUS)

302 KEY GENERATION UNIT
(FIRST KEY GENERATION UNIT)
(SECOND KEY GENERATION UNIT)
(DECRYPTION KEY ENCRYPTION UNIT)

303 KEY MANAGEMENT UNIT

101C INFORMATION TRANSMITTING/RECEIVING UNIT

800

ATTRIBUTE-PREDICATE GENERATION APPARATUS 600
(ENCRYPTION APPARATUS)

301F ATTRIBUTE GENERATION UNIT
(FIRST KEY GENERATION UNIT)

102F PREDICATE GENERATION UNIT
(FIRST KEY GENERATION UNIT)

101F INFORMATION TRANSMITTING/RECEIVING UNIT

KEY DEVICE 400

401 KEY STORAGE UNIT

402 KEY DECRYPTION PROCESS UNIT

101D INFORMATION TRANSMITTING/RECEIVING UNIT

ENCRYPTED TEXT RECEIVING APPARATUS 200

201 DECRYPTION PROCESS UNIT

101B INFORMATION TRANSMITTING/RECEIVING UNIT

# Fig. 19

FLOWCHART ILLUSTRATING KEY GENERATION PROCESS
BY KEY GENERATION APPARATUS

START

RECEIVE SECURITY PARAMETER AND
ATTRIBUTE FORMAT TO GENERATE PAIR OF
MASTER KEYS BY KEY GENERATION UNIT 302 —— S11

TRANSMIT GENERATION REQUEST OF
ATTRIBUTE OBJECT TO ATTRIBUTE-
PREDICATE GENERATION APPARATUS 600 —— S17

RECEIVE ATTRIBUTE SOURCE TO GENERATE
ATTRIBUTE OBJECT BY ATTRIBUTE
GENERATION UNIT 301F —— S12

RECEIVE PAIR OF MASTER KEYS AND
ATTRIBUTE OBJECT TO GENERATE USER
SECRET KEY BY KEY GENERATION UNIT 302 —— S13

GENERATE PAIR OF KEY DEVICE KEYS BY
KEY GENERATION UNIT 302 —— S14

TRANSMIT KEYS BY
INFORMATION TRANSMITTING/RECEIVING
UNIT 101C —— S15

END

# Fig. 20

FLOWCHART ILLUSTRATING ENCRYPTION PROCESS
BY ENCRYPTED TEXT TRANSMITTING APPARATUS

START

TRANSMIT GENERATION REQUEST OF PREDICATE
OBJECT TO ATTRIBUTE-PREDICATE GENERATION
APPARATUS 600 —— S24

RECEIVE PREDICATE SOURCE TO GENERATE
PREDICATE OBJECT BY PREDICATE
GENERATION UNIT 102F —— S21

RECEIVE MASTER PUBLIC KEY, PREDICATE OBJECT,
AND PLAINTEXT TO GENERATE ENCRYPTED TEXT BY
ENCRYPTION PROCESS UNIT 103 —— S22

TRANSMIT ENCRYPTED TEXT BY
INFORMATION TRANSMITTING/RECEIVING UNIT 101A —— S23

END

# Fig. 21

FLOWCHART ILLUSTRATING PROCEDURE FOR CHANGING ATTRIBUTE OF USER SECRET KEY BY KEY GENERATION TERMINAL APPARATUS

START

TRANSMIT ATTRIBUTE SOURCE AFTER CHANGE TO ATTRIBUTE-PREDICATE GENERATION APPARATUS 600 BY INFORMATION TRANSMITTING/RECEIVING UNIT 101C — S54

RECEIVE ATTRIBUTE SOURCE TO GENERATE ATTRIBUTE OBJECT BY ATTRIBUTE GENERATION UNIT 301F — S51

RECEIVE PAIR OF MASTER KEYS AND ATTRIBUTE OBJECT TO GENERATE USER SECRET KEY BY KEY GENERATION UNIT 302 — S52

TRANSMIT KEY BY INFORMATION TRANSMITTING/RECEIVING UNIT 101C — S53

END

# Fig.22

ENCRYPTED TEXT TRANSMITTING APPARATUS (ENCRYPTION APPARAUTS) — 100

PREDICATE GENERATION UNIT — 102A

ENCRYPTION PROCESS UNIT (DATA ENCRYPTION UNIT) — 103

INFORMATION TRANSMITTING/ RECEIVING UNIT — 101A

KEY GENERATION APPARATUS (ENCRYPTION APPARATUS) — 300

ATTRIBUTE GENERATION UNIT (FIRST KEY GENERATION UNIT) — 301C

KEY GENERATION UNIT (FIRST KEY GENERATION UNIT) (SECOND KEY GENERATION UNIT) (DECRYPTION KEY ENCRYPTION UNIT) — 302

INFORMATION TRANSMITTING/ RECEIVING UNIT — 101C

KEY MANAGEMENT UNIT — 303

800

ENCRYPTED TEXT HOLDING APPARATUS (ENCRYPTED TEXT DATA STORAGE APPARATUS) — 700

INFORMATION HOLDING UNIT — 701

INFORMATION TRANSMITTING/ RECEIVING UNIT — 101G

ENCRYPTED TEXT RECEIVING APPARATUS — 200

DECRYPTION PROCESS UNIT — 201

INFORMATION TRANSMITTING/ RECEIVING UNIT — 101B

KEY DEVICE — 400

KEY STORAGE UNIT — 401

KEY DECRYPTION PROCESS UNIT — 402

INFORMATION TRANSMITTING/ RECEIVING UNIT — 101D

EP 3 079 299 A1

## Fig.23

# Fig. 24

# Fig. 25

```
                    ┌──────────────┐
                    │  OPERATION   │   901
                    │    DEVICE    │
                    └──────┬───────┘
                           │
        ┌────────┬─────────┴────────┬──────────┐
        │        │                  │          │
 ┌──────────┐ ┌──────────┐ ┌──────────────┐ ┌──────────┐
 │ EXTERNAL │ │MAIN STORAGE│ │COMMUNICATION│ │INPUT/OUTPUT│
 │ STORAGE  │ │  DEVICE   │ │   DEVICE    │ │  DEVICE   │
 │  DEVICE  │ │          │ │             │ │          │
 └──────────┘ └──────────┘ └──────────────┘ └──────────┘
     902         903           904            905
```

**INTERNATIONAL SEARCH REPORT**

| | International application No. |
|---|---|
| | PCT/JP2013/082327 |

| A. CLASSIFICATION OF SUBJECT MATTER |
|---|
| *H04L9/14*(2006.01)i, *G06F21/62*(2013.01)i, *H04L9/08*(2006.01)i |

According to International Patent Classification (IPC) or to both national classification and IPC

| B. FIELDS SEARCHED |
|---|
| Minimum documentation searched (classification system followed by classification symbols)<br>H04L9/14, G06F21/62, H04L9/08 |

Documentation searched other than minimum documentation to the extent that such documents are included in the fields searched

| Jitsuyo Shinan Koho | 1922–1996 | Jitsuyo Shinan Toroku Koho | 1996–2013 |
|---|---|---|---|
| Kokai Jitsuyo Shinan Koho | 1971–2013 | Toroku Jitsuyo Shinan Koho | 1994–2013 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y<br>A | JP 2011-172099 A   (Nippon Telegraph and Telephone Corp.),<br>01 September 2011 (01.09.2011),<br>paragraphs [0036] to [0042], [0054] to [0061]<br>(Family: none) | 1,2,4,8-15<br>5-7<br>3 |
| Y | JP 2011-232475 A   (Mitsubishi Electric Corp. et al.),<br>17 November 2011 (17.11.2011),<br>paragraphs [0037] to [0071], [0079] to [0104]<br>& WO 2011/135895 A1 | 5,6 |
| Y | JP 2012-133214 A   (Mitsubishi Electric Corp. et al.),<br>12 July 2012 (12.07.2012),<br>paragraphs [0037] to [0092]<br>& WO 2012/086405 A1 | 7 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 December, 2013 (11.12.13) | 24 December, 2013 (24.12.13) |

| Name and mailing address of the ISA/<br>Japanese Patent Office | Authorized officer |
|---|---|
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011521584 A
- WO 2010123122 A1
- JP 2013026747 A

**Non-patent literature cited in the description**

- **T. OKAMOTO ; K. TAKASHIMA.** Fully Secure Functional Encryption With General Relations from the Decisional Linear Assumption. *CRYPTO 2010, Lecture Notes In Computer Science,* 2010, vol. 6223